# EUROPÄISCHE PATENTSCHRIFT

(11) **EP 3 626 497 B1**
(45) Veröffentlichungstag und Bekanntmachung des Hinweises auf die Patenterteilung: **06.05.2026**
(21) Anmeldenummer: 19193049.4
(22) Anmeldetag: 22.08.2019
(51) Int. Cl.: B60K 1/00, B60K 1/04, B62D 29/00, B62D 21/02, B62D 33/06

(54) **MODULAR AUFGEBAUTES NUTZFAHRZEUG**
MODULAR COMMERCIAL VEHICLE
VÉHICULE UTILITAIRE MODULAIRE

(30) Priorität: 30.08.2018 DE 102018121227
(43) Veröffentlichungstag der Anmeldung: 25.03.2020
(73) Patentinhaber: MAN Truck & Bus SE, 80995 München (DE)
(72) Erfinder: Kondic, Darko, 85757 Karlsfeld (DE); Kusch, Willi, 88239 Wangen im Allgäu (DE); Rohrmüller, Hans, 82216 Maisach (DE); Burger, Norbert, 84030 Ergolding (DE)
(74) Vertreter: v. Bezold & Partner Patentanwälte - PartG mbB

(56) Entgegenhaltungen:
- EP-A1- 2 554 420
- CN-A- 102 092 266
- DE-A1- 102004 017 426
- DE-A1- 102007 024 804
- DE-A1- 102011 103 989
- DE-A1- 102013 003 513
- FR-A1- 3 052 136
- TERRATROTTER: "Build an Expedition Truck: The Pass-Through", 21 May 2017 (2017-05-21), XP093157772, Retrieved from the Internet <URL:https://www.terratrotter.eu/build-an-expedition-truck-the-pass-through/>

## Beschreibung

Die Erfindung betrifft ein Nutzfahrzeug, vorzugsweise einen Lastkraftwagen, mit mehreren Modulen.

In einer konventionellen Fahrzeugmontage erfolgt der Wertschöpfungszuwachs linear mit dem Fertigstellunggrad des Fahrzeugs. Man unterscheidet zwei wesentliche Endmontagekonzepte: Linien- oder Bandmontage und Stand montage.

Eine Parallelisierung der Montageprozesse durch eine konsequente Modularisierung ist bei bestehenden Abläufen und Betriebseinrichtungen schwerlich umzusetzen. Nachteile entstehen, wenn an mehreren Standorten dasselbe Produkt in unterschiedlichen Stückzahlen montiert werden soll, da der Automatisierungsgrad des Montageprozesses nicht einheitlich amortisiert werden kann. Dies betrifft im Wesentlichen eine ckd-Fertigung (engl. completely knocked down). Dadurch entsteht zusätzlicher Dokumentationsaufwand.

Die DE 10 2013 004 837 A1 offenbart ein Nutzfahrzeug mit einem Antriebsaggregat zum Antreiben des Nutzfahrzeugs, einer Vorderachse, einer Hinterachse, einer Fahrerkabine und einer Ladeeinrichtung zum Transportieren von Transportgut. Das Nutzfahrzeug umfasst ein die Vorderachse und die Fahrerkabine umfassendes Frontmodul als erstes Modulelement. Das Nutzfahrzeug umfasst ein die Ladeeinrichtung umfassendes Frachtmodul als zweites Modulelement. Das Nutzfahrzeug umfasst ein die Hinterachse und das Antriebsaggregat umfassendes Antriebsmodul als drittes Modulelement. Die Modulelemente sind in Fahrzeuglängsrichtung aufeinander folgend miteinander verbunden.

Die DE 101 50 052 B4 offenbart ein modular aufgebautes Fahrgestell für einen Lastkraftwagen, mit einem Tragrahmen, der sich mittig in Fahrzeuglängsrichtung erstreckt und zwei Längsträger aufweist. Der Tragrahmen weist ein Frontmodul, das als Unterfahrschutz und Crashelement ausgebildet ist und zur Aufnahme eines Luft/Kühlmittel-Wärmetauschers dient, auf. Der Tragrahmen weist ein Antriebsmodul auf, das zur Aufnahme einer Brennkraftmaschine, eines Getriebes, eines Retarders und einer Vorderachse mit Federung und Dämpfung dient. Der Tragrahmen weist ein Mittenmodul auf. Der Tragrahmen weist wenigstens ein Hinterachsmodul auf, das zur Aufnahme einer Hinterachse mit Federung und Dämpfung dient. Der Tragrahmen weist ein Heckmodul auf, das als Unterfahrschutz und Crashelement ausgebildet ist und zur Aufnahme einer Anhängerkupplung dient.

Die FR 3 052 136 A1 bezieht sich auf ein Elektrofahrzeug mit einem rollenden Rahmen, der mit einer Plattform für den Transport von Lasten und einer Station für den Fahrbetrieb ausgestattet ist. Der rollende Rahmen besteht aus einem vorderen Teil, einem mittleren Teil und einem hinteren Teil, wobei der vordere und der hintere Teil jeweils mit den Vorder- und Hinterrädern ausgestattet sind. Der vordere Teil oder der hintere Teil ist mit elektrischen Antriebsmotoren für die Drehung der Räder ausgestattet, die durch Batterien mit Energie versorgt werden können, die von dem mittleren Teil des Rahmens getragen werden. Der mittlere Teil und der hintere Teil sind durch Schlitten miteinander gekoppelt, die eine Längenverstellung des Rahmens ermöglichen.

Weitere modular aufgebaute Nutzfahrzeuge sind bspw. aus der DE 199 26 607 A1 und der FR 2 822 783 bekannt.

Der Erfindung liegt die Aufgabe zu Grunde, ein alternatives und/oder verbessertes modular aufgebautes Nutzfahrzeug zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Die Erfindung schafft ein Nutzfahrzeug (z. B. Hybrid- oder Elektronutzfahrzeug), vorzugsweise einen Lastkraftwagen (z. B. Verteiler-Lastkraftwagen, vorzugsweise mit Ladeaufbau, z. B. mit Kofferaufbau). Das Nutzfahrzeug weist ein Rahmenmodul, das einen Fahrzeugrahmen, vorzugsweise einen Leiterrahmen, aufweist, auf. Das Nutzfahrzeug weist ein Vorderachsmodul, das eine Vorderachse und eine Vorderachsaufhängung aufweist und an den Fahrzeugrahmen montierbar ist, auf. Das Nutzfahrzeug weist ein Fahrerhausmodul, das an dem Fahrzeugrahmen montierbar ist, auf. Das Nutzfahrzeug weist ein Hinterachs-Antriebsmodul, das eine Hinterachse und eine elektrische Antriebseinheit, die trieblich mit der Hinterachse verbunden ist (z. B. mittels einer vorzugsweise schräg verlaufenden Gelenkwelle), aufweist und an den Fahrzeugrahmen montierbar ist (z. B. mittels einer Hinterachsaufhängung), auf. Das Nutzfahrzeug weist ein Energiebereitstellungsmodul, das zur Versorgung der elektrischen Antriebseinheit mit elektrischer Energie ausgebildet und an den Fahrzeugrahmen montierbar ist, auf.

Die Erfindung schafft ein Gesamtkonzept für ein modulares Nutzfahrzeug. Das Gesamtkonzept führt zu einer Vereinfachung des Montagesystems in der Fahrzeugendmontage. Die Endmontage erfolgt durch eine Zusammensetzung von einer geringen Anzahl von funktionalen Hauptmodulen über standardisierte Schnittstellen. Die Hauptmodule bieten jeweils eine Funktionsintegration mehrerer zusammengehöriger Funktionen des Nutzfahrzeugs. Die restlichen Anbauteile können bspw. im klassischen Montageprinzip (von innen nach außen, von unten nach oben) montiert werden. Jedes der Module kann sich fahrzeugspezifisch unterscheiden; einheitlich über die Varianten sind die Schnittstellen. Dadurch wird die Teilevielfalt am Endmontagestandort eingedämmt. Zusätzlich wird die Bevorratung der Einzelteile an allen Endmontagestandorten reduziert. Jedes der Module kann entkoppelt vom Endfahrzeug funktional prüfbar sein. Eine eindeutige Fehlerzuordnung und -behebung wird so unterstützt. Der Qualifikationsaufwand für die Montage komplexer Systeme wird durch die Systemzentralisierung reduziert. Die Montagereihenfolge kann nach Arbeitssicherheitskriterien priorisiert werden. So können z. B. ein Hauptmodul mit Hochvoltkomponenten am Ende des Montageprozesses eingebracht werden. Der Herstellort der Module ist unabhängig vom Endmontagestandort. Dadurch können sich Spezialisierungen für bestimmte Funktionen bilden. Zusätzlich kann der Vergabewettbewerb gestärkt werden. Weitere Vorteile, die sich ergeben können, betreffen eine hohe Qualitätsfähigkeit durch Zentralisierung der Modulmontage, einen reduzierten Dokumentations- und Änderungsaufwand während des Produktlebenszyklus sowie austauschbare Module. Die Servicefreundlichkeit kann durch bessere Zugänglichkeit an den Bauteilen verbessert werden. Zusätzlich kann die Lokalisierung durch Gestaltungsmöglichkeiten bei lokalen Produktions- und Montagestandortoptionen unterstützt werden. Es können sich geringere Investitionen durch Zentralisierung der Modul-Fertigungsstandorte von komplexen Einheiten und niedrigere Amortisationszeiten bei Automatisierungsaufwänden ergeben. Schließlich kann sich auch eine bessere Wirtschaftlichkeit durch Mengeneffekte bei der Herstellung der Hauptmodule ergeben.

In einem Ausführungsbeispiel ist das Rahmenmodul, das Vorderachsmodul, das Fahrerhausmodul, das Hinterachs-Antriebsmodul und/oder das Energiebereitstellungsmodul jeweils separat vorgefertigt und vormontiert.

In einem weiteren Ausführungsbeispiel ist das Energiebereitstellungsmodul zwischen dem Vorderachsmodul und dem Hinterachs-Antriebsmodul an den Fahrzeugrahmen montierbar.

In einem weiteren Ausführungsbeispiel ist das Energiebereitstellungsmodul von unten an den Fahrzeugrahmen montierbar.

In einer Ausführungsform weist das Energiebereitstellungsmodul mehrere Hochvolt-Energiespeicher, ein Kühlsystem für die Hochvolt-Energiespeicher, einen Heizer für die Hochvolt-Energiespeicher, einen Hochvolt-Stromverteiler, ein Bordladegerät, einen DC-DC-Wandler, mehrere Niedervolt-Energiespeicher und/oder eine Lenkpumpe auf.

In einer weiteren Ausführungsform ist das Energiebereitstellungsmodul eigenständig, vorzugsweise elektrisch, prüffähig ausgebildet.

In einer weiteren Ausführungsform weist das Vorderachsmodul mindestens eine Befestigungskonsole zur Montage an den Fahrzeugrahmen auf und vorzugsweise hängt die Vorderachsaufhängung die Vorderachse an der mindestens einen Befestigungskonsole auf.

In einer weiteren Ausführungsform weist das Vorderachsmodul ein Antiblockiersystem-Regelventil und/oder Luftfederbälge auf.

In einer weiteren Ausführungsform ist die Vorderachsaufhängung eine Einzelradaufhängung.

In einer Ausführungsvariante ist das Fahrerhausmodul rückseitig starr und/oder mittels mindestens einer Befestigungskonsole des Vorderachsmoduls an dem Fahrzeugrahmen befestigt.

In einer weiteren Ausführungsvariante weist das Fahrerhausmodul einen frontseitigen Unterfahrschutz und/oder mindestens eine Abschleppvorrichtung auf. Erfindungsgemäß weist das Fahrerhausmodul einen Durchtritt zu einem Ladeaufbau des Nutzfahrzeugs und/oder einen horizontal oder annähernd horizontal ausgerichteten Klimaanlagen-Wärmetauscher (z. B. Klimaanlagen-Kondensator) auf.

In einer weiteren Ausführungsvariante weist das Fahrerhausmodul eine Fahrerhaustragstruktur auf, die einen Fahrerhausrohbau bildet und als ein Gitterrahmen ausgebildet ist.

In einem Ausführungsbeispiel ist die elektrische Antriebseinheit bezüglich einer Vorwärtsfahrtrichtung des Nutzfahrzeugs hinter der Hinterachse angeordnet ist.

In einem weiteren Ausführungsbeispiel ist die elektrische Antriebseinheit schräg an den Fahrzeugrahmen montierbar.

In einem weiteren Ausführungsbeispiel ist elektrische Antriebseinheit in einer 3-Punkt-Lagerung an den Fahrzeugrahmen montierbar.

In einer Ausführungsform ist die elektrische Antriebseinheit zwischen zwei parallelen Hauptlängsträgern des Fahrzeugrahmens montierbar.

In einer weiteren Ausführungsform ist die elektrische Antriebseinheit in einer Vertikalrichtung nach oben bündig oder zurückversetzt bezüglich des Fahrzeugrahmens.

In einer weiteren Ausführungsform steht die elektrische Antriebseinheit in einer Vertikalrichtung nach unten über den Fahrzeugrahmen über.

In einer Ausführungsvariante weist das Nutzfahrzeug ferner ein Druckluftmodul auf, das zur Bereitstellung von Druckluft ausgebildet und an den Fahrzeugrahmen montierbar ist.

In einer Weiterbildung ist das Druckluftmodul an einer Längsaußenseite des Fahrzeugrahmens montierbar.

In einer Weiterbildung ist das Druckluftmodul bezüglich einer Vorwärtsfahrtrichtung des Nutzfahrzeugs hinter der Hinterachse angeordnet.

In einer weiteren Ausführungsvariante weist das Druckluftmodul einen Luftkompressor, eine Druckluftaufbereitung zum Kühlen, Filtern und/oder Trocknen von Druckluft, einen Druckluftspeicher, mindestens eine Bremsventileinheit für ein pneumatisches Bremssystem des Nutzfahrzeugs und/oder eine Druckluft-Luftfederungsventileinheit für ein pneumatisches Luftfederungssystem des Nutzfahrzeugs auf.

In einer weiteren Ausführungsvariante ist das Druckluftmodul eigenständig, vorzugsweise elektrisch und/oder pneumatisch, prüffähig ausgebildet.

In einer weiteren Ausführungsvariante ist das Druckluftmodul separat vorgefertigt und vormontiert.

In einem Ausführungsbeispiel weist das Nutzfahrzeug ferner ein Kühlmodul auf, das zum Kühlen der elektrischen Antriebseinheit und/oder des Energiebereitstellungsmoduls ausgebildet ist und an den Fahrzeugrahmen montierbar ist.

In einer Weiterbildung ist das Kühlmodul an einer Längsaußenseite des Fahrzeugrahmens montierbar.

In einer Weiterbildung ist das Kühlmodul bezüglich einer Vorwärtsfahrtrichtung des Nutzfahrzeugs hinter der Hinterachse angeordnet.

In einem weiteren Ausführungsbeispiel weist das Kühlmodul einen Kühler, vorzugsweise einen Ölkühler, zum Kühlen der elektrischen Antriebseinheit und einen Kühler, vorzugsweise einen Wasserkühler, zum Kühlen von Hochvolt-Komponenten, vorzugsweise des Energiebereitstellungsmoduls, auf.

In einem weiteren Ausführungsbeispiel ist das Kühlmodul eigenständig, vorzugsweise elektrisch, prüffähig ausgebildet.

In einem weiteren Ausführungsbeispiel ist das Kühlmodul separat vorgefertigt und vormontiert.

In einer Ausführungsform weist das Nutzfahrzeug ferner ein Ladeaufbaumodul auf, das auf den Fahrzeugrahmen oberhalb des Vorderachsmoduls, des Energiebereitstellungsmoduls und/oder des Hinterachs-Antriebsmoduls montierbar ist und zum Aufnehmen von Ladegut ausgebildet ist.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht eines modular aufgebauten Nutzfahrzeugs gemäß einem Ausführungsbeispiel der vorliegenden Offenbarung;
- Figur 2: eine perspektivische Ansicht eines Fahrerhausmoduls des beispielhaften Nutzfahrzeugs;
- Figur 3: eine perspektivische Ansicht eines hinteren Bereichs einer Fahrerhaustragvorrichtung des Fahrerhausmoduls des beispielhaften Nutzfahrzeugs;
- Figur 4: eine perspektivische Ansicht eines vorderen Eckbereichs der Fahrerhaustragvorrichtung des Fahrerhausmoduls des beispielhaften Nutzfahrzeugs;
- Figur 5: eine Seitenansicht eines vorderen, unteren Bereichs der Fahrerhaustragvorrichtung des Fahrerhausmoduls des beispielhaften Nutzfahrzeugs;
- Figur 6: eine perspektivische Ansicht eines Vorderachsmoduls des beispielhaften Nutzfahrzeugs;
- Figur 7: eine perspektivische Ansicht eines Energiebereitstellungsmoduls und eines Rahmenmoduls des beispielhaften Nutzfahrzeugs;
- Figur 8: eine perspektivische Ansicht des Energiebereitstellungsmoduls des beispielhaften Nutzfahrzeugs;
- Figur 9: eine perspektivische Ansicht einer Tragvorrichtung des Energiebereitstellungsmoduls des beispielhaften Nutzfahrzeugs;
- Figur 10: eine perspektivische Ansicht eines Teils eines Hinterachs-Antriebsmoduls des beispielhaften Nutzfahrzeugs;
- Figur 11: eine perspektivische Ansicht eines weiteren Teils des Hinterachs-Antriebsmoduls des beispielhaften Nutzfahrzeugs;
- Figur 12: ein Heckbereich des beispielhaften Nutzfahrzeugs mit weiteren Modulen;
- Figur 13: eine perspektivische Ansicht eines Druckluftmoduls des beispielhaften Nutzfahrzeugs;
- Figur 14: eine weitere perspektivische Ansicht des beispielhaften Druckluftmoduls; und
- Figur 15: eine Draufsicht auf das beispielhafte Druckluftmodul.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

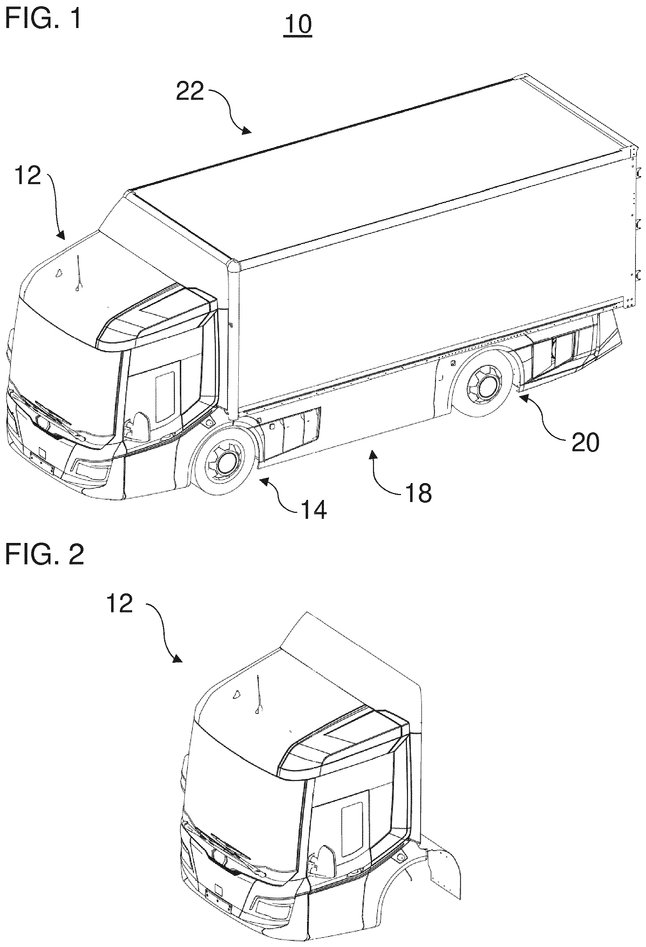

Figur 1 zeigt ein Nutzfahrzeug 10. Das Nutzfahrzeug 10 ist vorzugsweise als ein Lastkraftwagen, zweckmäßig mit Ladeaufbau, ausgebildet, wie dargestellt ist. Das Nutzfahrzeug 10 kann bspw. als ein Elektro-Nutzfahrzeug, das als Antriebskraftquelle lediglich eine elektrische Antriebseinheit aufweist, oder als ein Hybrid-Nutzfahrzeug, das eine elektrische Antriebseinheit und eine zusätzliche Antriebseinheit bspw. mit Verbrennungsmotor aufweist, ausgebildet sein.

Das Nutzfahrzeug 10 ist modular aufgebaut. Das Nutzfahrzeug 10 weist ein Fahrerhausmodul 12, ein Vorderachsmodul 14, ein Rahmenmodul 16 (verdeckt in Figur 1), ein Energiebereitstellungsmodul 18 und ein Hinterachs-Antriebsmodul 20 auf.

Zweckmäßig weist das Nutzfahrzeug 10 zusätzlich ein Ladeaufbaumodul 22 auf. Das Ladeaufbaumodul 22 ist zum Transportieren von Ladegut, vorzugsweise als Kofferaufbaumodul, ausgebildet. Es ist möglich, dass das Ladeaufbaumodul 22 jeglichen Typ von offenen oder geschlossen Ladeaufbau aufweist, z. B. auch Mulden usw.. Das Ladeaufbaumodul 22 ist zum Transportieren von Ladegut, vorzugsweise als Kofferaufbaumodul, ausgebildet. Das Ladeaufbaumodul 22 kann auf einem Fahrzeugrahmen 68 des Rahmenmoduls 16 abgestützt sein. Es ist möglich, dass das Nutzfahrzeug 10 weitere und/oder alternative Module aufweist, wie hierin an anderer Stelle beispielhaft beschrieben ist.

Das Fahrerhausmodul 12, das Vorderachsmodul 14, das Rahmenmodul 16, das Energiebereitstellungsmodul 18, das Hinterachs-Antriebsmodul 20, das Ladeaufbaumodul 22 und/oder die weiteren Module des Nutzfahrzeugs können separat vorgefertigt und vormontiert sein. Anschließend können die Module an den Fahrzeugrahmen 68 des Rahmenmoduls 16 montiert werden. Vorzugsweise sind die Einzelkomponenten der Module des Nutzfahrzeugs 10 selbst modular veränderbar und/oder erweiterbar, und zwar jeweils fahrzeugspezifisch bezüglich des jeweiligen Nutzfahrzeugs 10.

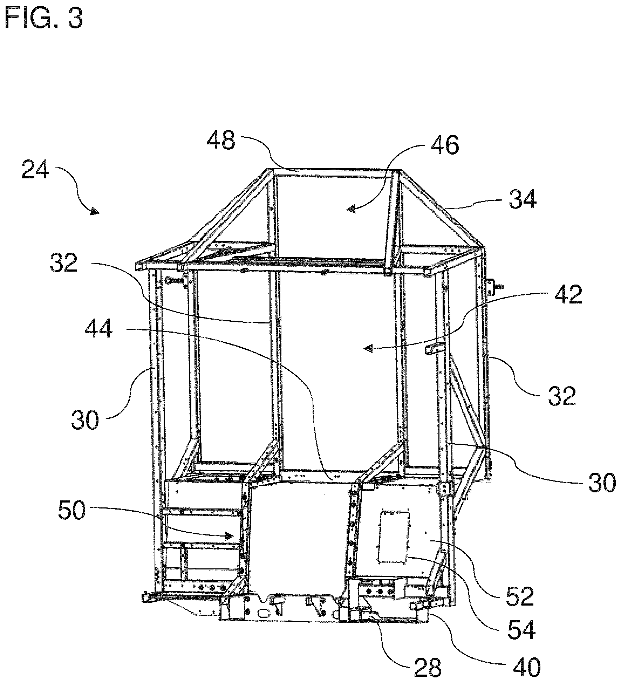

Nachfolgend ist unter Bezugnahme auf die Figuren 2 bis 5 das Fahrerhausmodul 12 näher beschrieben. Die Figuren 3 bis 5 zeigen Abschnitte eines Rohbaus des Fahrerhausmoduls 12.

Eine Besonderheit des Nutzfahrzeugs 10 kann darin liegen, dass das Fahrerhausmodul 12 bodennah mit einem Bodenabstand von beispielsweise 40 cm oder weniger angeordnet ist. Ein geringer Bodenabstand kann einen Einstieg in das Fahrerhausmodul 12 und einen Ausstieg aus dem Fahrerhausmodul 12 komfortabler gestalten. Der geringe Bodenabstand kann durch eine starre Lagerung des Fahrerhausmoduls 12 ermöglicht werden. Das Fahrerhausmodul 12 kann zweckmäßig an dessen Rückseite starr / nicht-federnd direkt oder indirekt an den Fahrzeugrahmen 68 des Rahmenmoduls 16 abgestützt sein, zum Beispiel mittels dazwischen angeordneten Befestigungskonsolen 62 des Vorderachsmoduls 14.

Das Fahrerhausmodul 12 weist eine Fahrerhaustragstruktur 24 auf. Die Fahrerhaustragstruktur 24 ist eine tragende Struktur und bildet einen selbsttragenden Fahrerhausrohbau. Die Fahrerhaustragstruktur 24 weist eine Fahrerhausvorderwandstruktur 26, eine Fahrerhausbodenstruktur 28, Fahrerhausseitenwandstrukturen 30, eine Fahrerhausrückwandstruktur 32 und eine Fahrerhausdachstruktur 34 auf.

Die Fahrerhaustragstruktur 24 insgesamt und die einzelnen Strukturen 26-34 sind als Gitterrahmen konzipiert. Der Gitterrahmen weist eine Vielzahl von länglichen Trägerelementen auf, die in Knotenpunkten miteinander verbunden sind. Die Trägerelemente können beispielsweise, wie dargestellt ist, Vierkantrohre aufweisen. Es ist auch möglich, dass die länglichen Trägerelemente andere Stabelemente, Rohrelemente und/oder Profilelemente aufweisen. In den Knotenpunkten sind die länglichen Trägerelemente beispielsweise miteinander verschraubt, verschweißt, verklebt und/oder anderweitig miteinander gefügt. Der Gitterrahmen kann beispielsweise zusätzlich beplankt werden. In der dargestellten Ausführungsform ist der Gitterrahmen als ein Metallrohrgerippe bzw. ein Metallprofilgerippe aufgebaut. Als Metall kann beispielsweise Stahl oder auch Aluminium verwendet werden.

Zusätzlich zur Eigenschaft einer Festigkeitsstruktur und der Aufnahme von Beplankungskomponenten kann die Fahrerhaustragstruktur 24 noch weitere Funktionen aufweisen, die durch eine geeignete Ausführung integriert werden können.

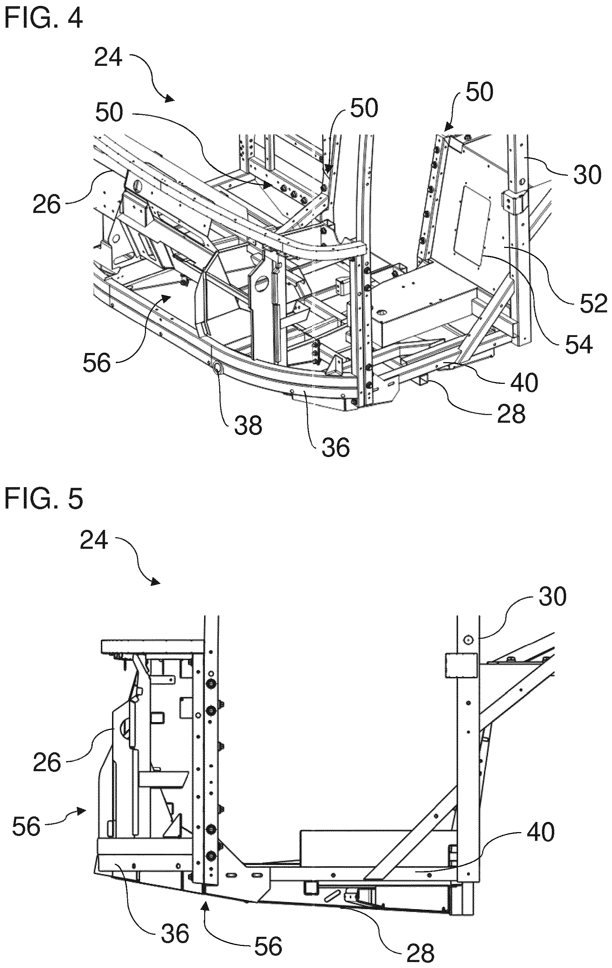

Die Fahrerhaustragstruktur 24 kann einen frontseitigen Unterfahrschutz 36 (siehe Figuren 4 und 5) aufweisen. Der Unterfahrschutz 36 ist als eine Querträgerkonstruktion des Gitterrahmens der Fahrerhaustragstruktur 24 direkt in den Gitterrahmen integriert. In anderen Worten, der Unterfahrschutz 36 wird direkt über das Gerippe der Fahrerhaustragstruktur 24 dargestellt. Die geometrischen Anforderungen und die Festigkeitsanforderungen werden direkt an der Fahrerhaustragstruktur 24 umgesetzt. Der Unterfahrschutz 36 kann in Höhe der Fahrerhausbodenstruktur 28 angeordnet sein. Hierdurch kann die Fahrerhausbodenstruktur 28 verstärkend auf den Unterfahrschutz 36 einwirken. Zweckmäßig bildet der Unterfahrschutz 36 eine frontseitige Unterkante des Gitterrahmens.

Der Unterfahrschutz 36 kann eine Höhe von mindestens 120 mm und einen Bodenabstand von höchstens 40 cm aufweisen. Der Unterfahrschutz 36 erstreckt sich im Wesentlichen entlang einer gesamten Breite des Fahrerhausmoduls 12. Es ist möglich, wie dargestellt ist, dass der Unterfahrschutz 36 mehrere, zum Beispiel zwei, übereinanderliegenden Profile, zum Beispiel Hohlprofile, aufweist. Wie dargestellt ist, kann der Unterfahrschutz 36 an dessen entgegengesetzten Enden gekrümmt ausgebildet sein. Zweckmäßig kann der Unterfahrschutz 36 nach ECE-R93 ausgeführt sein.

In den frontseitigen Unterfahrschutz 36 kann eine oder können mehrere Abschleppvorrichtungen 38 integriert sein. Die Abschleppvorrichtung 38 kann an einer Vorderseite der Fahrerhaustragstruktur 24 angeordnet sein. Die Abschleppvorrichtung 38 kann bspw. als ein Gewindeloch zum Einschrauben einer Abschleppöse ausgebildet sein. Durch die bodennahe Integration der Abschleppvorrichtung 38 kann ein Kraftfluss beim Abschleppen zweckmäßig direkt in die Fahrerhausbodenstruktur 28 eingeleitet werden, die die auftretenden Abschleppkräfte in den Fahrzeugrahmen 68 des Rahmenmoduls 16 weiterleiten kann.

Die Fahrerhaustragstruktur 24 kann an beiden Außenseiten Seitencrashstrukturen 40 für den Insassenschutz aufweisen. Die Seitencrashstrukturen 40 sind jeweils als eine Längsträgerkonstruktion des Gitterrahmens der Fahrerhaustragstruktur 24 direkt in den Gitterrahmen integriert. Insbesondere sind die Seitencrashstrukturen 40 an entgegengesetzten Außenseiten der Fahrerhausbodenstruktur 28 angeordnet.

Zweckmäßig können die Seitencrashstrukturen 40 auf gleicher Höhe wie der frontseitige Unterfahrschutz 36 angeordnet sein. Die Seitencrashstrukturen 40 sind dazu ausgebildet, bei einem Seitenaufprall unter vorbestimmter plastischer Deformation eine Aufprallenergie abzubauen, wobei verhindert wird, dass das aufprallende Fahrzeug in die Fahrerhaustragstruktur 24 eindringt. Mittels der Seitencrashstrukturen 40 kann die Funktion des frontseitigen Unterfahrschutzes 36 auch für seitlich auftreffende Fahrzeuge entsprechend umgesetzt werden.

In der Fahrerhausrückwandstruktur 32 kann ein Durchtritt oder Durchgang 42 in Form einer Aussparung im Gitterrahmen der Fahrerhausrückwandstruktur 32 angeordnet sein. Der Durchtritt 42 ist bezüglich einer Querachse der Fahrerhausrückwandstruktur 32 mittig in der Fahrerhausrückwandstruktur 32 angeordnet. Der Durchtritt 42 ermöglicht, dass das Ladeaufbaumodul 22 (siehe Figur 1) vom Fahrerhausmodul 12 aus begangen werden kann. Dies kann bei bestimmten Fahrzeugausführungen vorteilhaft sein. Durch die Integration des Durchtritts 42 in den Gitterrahmen kann eine Durchstiegsfunktion realisiert werden, ohne dass festigkeitseinschränkende Eingriffe bezüglich der Fahrerhaustragstruktur 24 notwendig sind.

Der Durchtritt 42 kann bezüglich eines Bodens der Fahrerhaustragstruktur 24 erhöht angeordnet sein, zum Beispiel in einem Bereich zwischen 30 cm und 80 cm. Zweckmäßig kann ein Unterkantenprofil 44 des Durchtritts 42 ungefähr auf Höhe einer Unterkante des Ladeaufbaumoduls 22 sein. Zum Erreichen des Durchtritts 42 kann im Fahrerhausmodul 12 eine Treppe (nicht dargestellt) angeordnet sein. Es ist möglich, dass die Fahrerhausdachstruktur 34 eine Aussparung 46 aufweist, die einen oberen Bereich des Durchtritts 42 bildet. Beispielsweise kann ein Oberkantenprofil 48 des Durchtritts 42 durch einen oberen oder obersten Querträger der Fahrerhausdachstruktur 34 gebildet sein. Somit kann ermöglicht werden, dass der Durchtritt 42 beispielsweise in aufrechter oder annähernd aufrechter Haltung durchschritten werden kann. Im Durchtritt 42 kann beispielsweise eine Tür o.ä. angeordnet sein.

Mittels der Fahrerhausrückwandstruktur 32 kann die Fahrerhaustragstruktur 24 an dem Fahrzeugrahmen 68 des Rahmenmoduls 16 starr abgestützt sein. Bspw. können Hauptlängsträger 70 des Fahrzeugrahmens 68 die Fahrerhaustragstruktur 24 starr über eine oder mehrere Befestigungskonsolen 62 des Vorderachsmoduls 14 tragen. Durch eine stufige Ausführung der Fahrerhausrückwandstruktur 32 kann die Fahrerhausrückwandstruktur 32 sowohl in einer Vertikalrichtung als auch in einer Horizontalrichtung an der oder den Befestigungskonsolen 62 starr abgestützt sein. Die Befestigungskonsolen 62 können wiederum starr an dem Fahrzeugrahmen 68 befestigt sein.

Es ist möglich, dass die Fahrerhausrückwandstruktur 32 und/oder die Fahrerhausbodenstruktur 28 lösbar an den Befestigungskonsolen 62 anbringbar sind, zum Beispiel mittels Schrauben. Mehrere Verschraubungspunkte 50, zum Beispiel Schraubenlöcher, der Fahrerhausrückwandstruktur 32 und/oder der Fahrerhausbodenstruktur 28 können direkt in den (länglichen) Trägerelementen des Gitterrahmens integriert sein.

Eine Beplankung 52, z. B. aus Blech oder Kunststoff, der Fahrerhausrückwandstruktur 32 kann auf der Fahrerseite eine, vorzugsweise rechteckförmige, Durchgangsöffnung 54 aufweisen. Die Durchgangsöffnung 54 kann einen Verschiebeweg eines verschiebbaren Fahrersitzes (nicht dargestellt) im Fahrerhausmodul 12 nach hinten durch Bereitstellen eines zusätzlichen rückseitigen Verschieberaums verlängern. Beispielsweise kann eine am Fahrersitz befestigte Gurtrolle in die Durchgangsöffnung 54 eintauchen, wenn der Fahrersitz bis zum Endanschlag nach hinten verschoben wird.

Die Fahrerhaustragstruktur 24 kann einen Luftführungskanal 56 für Kühlluft aufweisen. Der Luftführungskanal 56 erstreckt sich zwischen einer Öffnung an einer Vorderseite der Fahrerhausvorderwandstruktur 26 schräg nach unten zu einer Öffnung in einer Unterseite der Fahrerhausbodenstruktur 28. Der Luftführungskanal 56 kann zweckmäßig bezüglich einer Querachse der Fahrerhaustragstruktur 24 (d .h. Querachse des Nutzfahrzeugs 10) mittig in der Fahrerhaustragstruktur 24 angeordnet sein. Im Bereich der Öffnung an der Vorderseite entsteht während der Fahrt des Nutzfahrzeugs 10 ein Staudruckgebiet. Im Bereich der Öffnung an der Unterseite kann während der Fahrt des Nutzfahrzeugs 10 ein Unterdruck entstehen.

Im Luftführungskanal 56 können beispielsweise ein Gebläse und ein Wärmetauscher (nicht dargestellt) angeordnet sein. Das Gebläse kann beispielsweise aktiviert werden, wenn das Nutzfahrzeug 10 steht oder nicht genügend Kühlluft durch den Luftführungskanal 56 strömt. Der Wärmetauscher kann insbesondere ein Klimaanlagen-Kondensator einer Fahrerhaus-Klimaanlage des Nutzfahrzeugs 10 sein. Aus Bauraumgründen kann es günstig sein, den Wärmetauscher in einer horizontalen Ausrichtung oder einer Ausrichtung, die bis zu maximal 45° geneigt zu einer Horizontalachse ist, in dem Luftführungskanal 56 einzubauen. Der Wärmetauscher kann insbesondere in oder benachbart zu der Öffnung an der Unterseite der Fahrerhausbodenstruktur 28 angeordnet sein, zweckmäßig im in Wesentlichen horizontaler Ausrichtung.

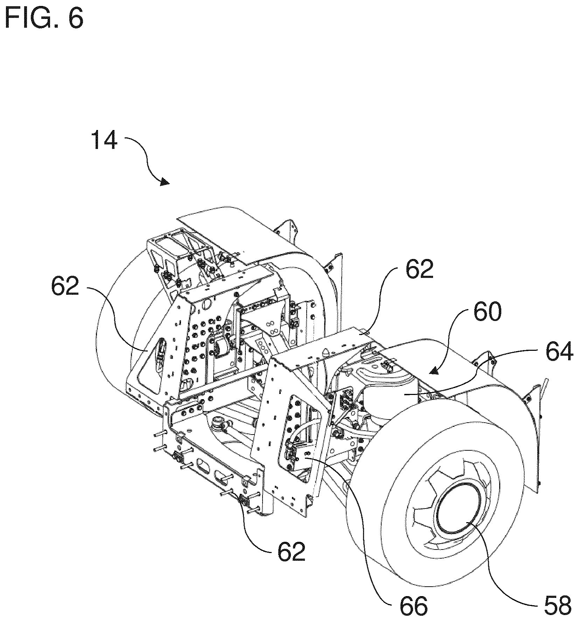

Die Figur 6 zeigt das Vorderachsmodul 14. Das Vorderachsmodul 14 weist eine Vorderachse 58, eine Vorderachsaufhängung 60 und vorzugsweise die Befestigungskonsolen 62 auf.

Die Vorderachsaufhängung 60 ist zweckmäßig eine Einzelradaufhängung. Die Vorderachsaufhängung 60 weist Luftfederbälge 64 zur Federung und Dämpfung auf. Die Vorderachsaufhängung 60 hängt die Vorderachse 58 an den Befestigungskonsolen 62 auf. Es ist möglich, dass im Vorderachsmodul 14 eine elektronische Steuereinheit zum Steuern einer Druckluftzufuhr zu den Luftfederbälgen 64 und einer Druckluftabfuhr aus den Luftfederbälgen 64 aufweist.

Die Befestigungskonsolen 62 umfassen zwei außenseitige Befestigungskonsolen 62 und eine bodenseitige Befestigungskonsole 62, die zwischen den zwei außenseitigen Befestigungskonsolen 62 befestigt ist. Die Befestigungskonsolen 62 sind zur starren Anbringung des Vorderachsmoduls 14 an den Fahrzeugrahmen 68 des Rahmenmoduls 16 ausgebildet. Ferner bilden die Befestigungskonsolen 62 eine Stützkonstruktion für das Fahrerhausmodul 12. Das Fahrerhausmodul 12 kann beispielsweise rückseitig starr mit den Befestigungskonsolen 62 verschraubt werden. Die Befestigungskonsolen 62 können wiederum mit dem Fahrzeugrahmen 68 des Rahmenmoduls 16 starr verschraubt werden. Zwischen den außenseitigen Befestigungskonsolen 62 kann zusätzlich zu der bodenseitigen Befestigungskonsole 62 bodenseitig mindestens ein weiterer Querträger zur Aussteifung angeordnet sein.

Das Vorderachsmodul 14 kann weitere Komponenten aufweisen, wie bspw. Antiblockiersystem-Regelventile 66 für beide Räder. Die Antiblockiersystem-Regelventile 66 können eine Druckluftbetätigung der pneumatischen Betriebsbremsen der Räder der Vorderachse 58 regeln.

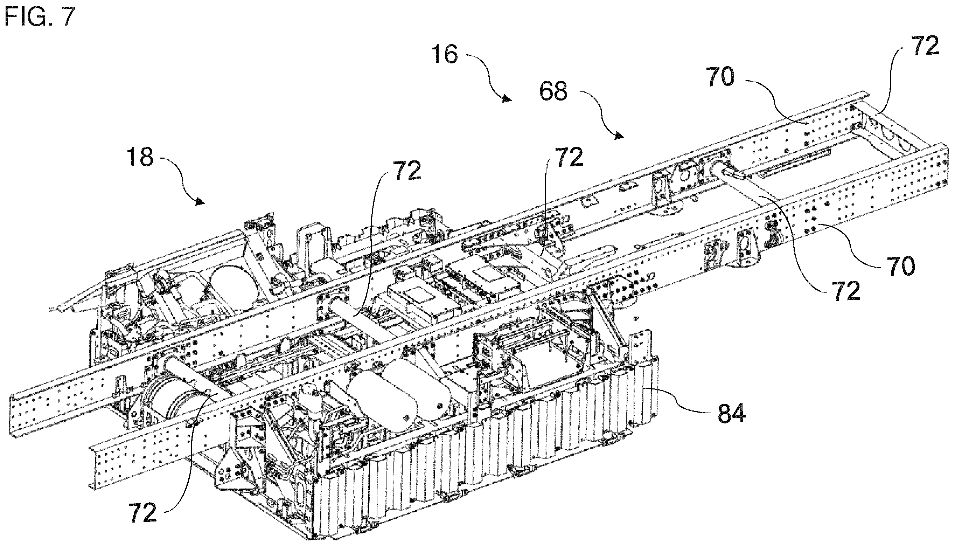

Die Figur 7 zeigt das Rahmenmodul 16 und das Energiebereitstellungsmodul 18.

Das Rahmenmodul 16 weist den Fahrzeugrahmen 68 auf. Vorzugsweise ist der Fahrzeugrahmen 68 als ein Leiterrahmen gebildet, wie dargestellt ist. Der Fahrzeugrahmen 68 kann zwei parallel verlaufende Hauptlängsträger 70 aufweisen. Zwischen den Hauptlängsträgern 70 können mehrere Querträger 72 befestigt sein.

Das Energiebereitstellungsmodul 18 ist von unten an dem Fahrzeugrahmen 68 montiert, vorzugsweise starr. Im Einzelnen kann das Energiebereitstellungsmodul 18 von außen an den Hauptlängsträgern 70 und/oder von unten an Querträgern des Fahrzeugrahmens 68 befestigt sein, vorzugsweise lösbar, zum Beispiel mittels Schrauben. Das Energiebereitstellungsmodul 18 ist zwischen dem Vorderachsmodul 14 und dem Hinterachs-Antriebsmodul 20 des Nutzfahrzeugs 10 angeordnet.

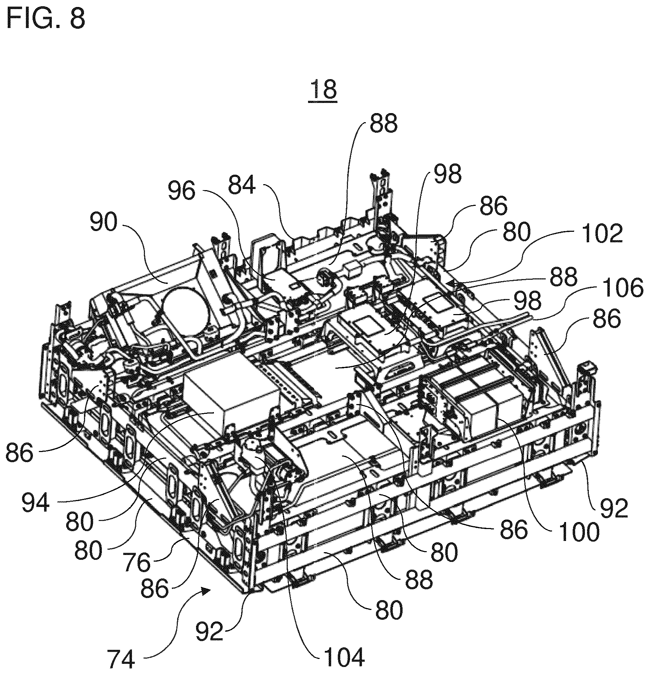

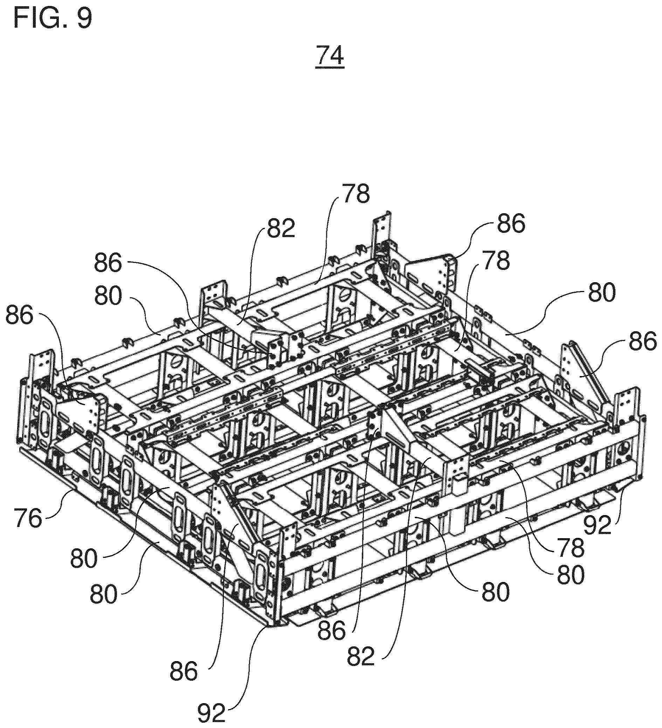

Die Figuren 8 und 9 zeigen das Energiebereitstellungsmodul 18. Das Energiebereitstellungsmodul 18 ist dazu ausgebildet, elektrische Energie zum Antreiben einer außerhalb des Energiebereitstellungsmoduls 18 angeordneten elektrischen Antriebseinheit 112 des Nutzfahrzeugs 10 bereitzustellen. Das Energiebereitstellungsmodul 18 integriert neben elektrischen Energiespeichern zusätzlich wesentliche Hochvolt- und Niedervolt-Komponenten des Nutzfahrzeugs 10. Die Figur 8 zeigt eine Tragstruktur 74 des Energiebereitstellungsmoduls 18 teilweise. Die Figur 9 zeigt die Tragstruktur 74 des Energiebereitstellungsmoduls 18 vollständig, wobei die elektrischen Komponenten des Energiebereitstellungsmoduls 18 in Figur 9 aus Übersichtsgründen weggelassen sind. Die Tragstruktur 74 kann einen Grundrahmen 76 und mehrere Trageinheiten 78 aufweisen.

Der Grundrahmen 76 ist als Außenrahmen ausgeführt und vorzugsweise kastenförmig oder käfigförmig und nach oben offen ausgebildet. Die mehreren Trageinheiten 78 sind vorzugsweise ebenfalls kastenförmig oder käfigförmig ausgebildet. Die mehreren Trageinheiten 78 sind in dem Grundrahmen 76 aufgenommen. Vorzugsweise sind die mehreren Trageinheiten 78 elastisch gelagert und somit entkoppelt von dem Grundrahmen 76 in dem Grundrahmen 76 aufgenommen. Beispielsweise sind die Trageinheiten 78 über bodenseitige elastische Lager, zum Beispiel Gummilager, an einem Boden des Grundrahmens 76 abgestützt.

Im gezeigten Ausführungsbeispiel sind drei Trageinheiten 78 nebeneinander und bezüglich einer Längsrichtung des Nutzfahrzeugs 10 ausgerichtet angeordnet. Im an den Fahrzeugrahmen 68 montierten Zustand des Energiebereitstellungsmoduls 18 ist die innere bzw. mittige Trageinheit 78 direkt unterhalb des Fahrzeugrahmens 68 angeordnet. Die beiden äußeren Trageinheiten 78 sind jeweils an beiden Längsaußenseiten des Fahrzeugrahmens 68 unterhalb des Fahrzeugrahmens 68 angeordnet.

In den Trageinheiten 78 sind die elektrischen Komponenten des Energiebereitstellungsmoduls 18 aufgenommen. Aufgrund der elastischen Lagerung der Trageinheiten 78 können sich Vibrationen während des Fahrbetriebs weniger schädlich auf die elektrischen Komponenten auswirken. Ferner können die elektrischen Komponenten beispielsweise bei einem Seitenaufprall auf das Energiebereitstellungsmodul 18 besser geschützt werden, da sie sich begrenzt in einer Richtung des Seitenaufpralls bewegen können.

Der Grundrahmen 76 bildet eine Schutzstruktur zum Schutz der Trageinheiten 78 und der darin gelagerten elektrischen Komponenten bei Unfällen, insbesondere bei einem Seitenaufprall. Die Schutzstruktur wird durch eine rahmenförmige Anordnung von Außenträgern (Au-ßenquer- und -längsträger) 80 geschaffen, die die Trageinheiten 78 zur Vorderseite, zur Rückseite, zur rechten Längsaußenseite und zur linken Längsaußenseite hin absichern. Ferner sind mehrere Innenquerträger 82 angeordnet, die die Außenträger 80 der Längsaußenseite direkt an dem Fahrzeugrahmen 68 abstützen. Eine Bodenseite des Grundrahmens 76 ist gitterrahmenförmig bspw. aus Flachblechprofilen oder Blechstreifen gebildet.

Ferner kann an den Längsaußenseiten des Grundrahmens 76 eine Crashstruktur 84 angeordnet sein (siehe Figuren 7 und 9). Die Crashstruktur 84 ist so ausgebildet, dass sie bei einem Seitenaufprall beispielsweise eines PKW unter vorbestimmter plastischer Deformation eine Aufprallenergie absorbiert. Hierbei werden die Trageinheiten 78 nicht beeinträchtigt. Die Crashstruktur 84 kann beispielsweise, wie dargestellt ist, aus einer Trapezblechstruktur gebildet sein. Es ist allerdings beispielsweise auch möglich, dass die Crashstruktur 84 durch eine andere, vorzugsweise aus Blech und /oder Kunststoff gebildete, dreidimensionale Profilstruktur und/oder durch einen Metallschaum gebildet ist.

Bei einem Seitenaufprall kann somit ein stufiger Abbau der Aufprallenergie erfolgen. Zunächst verformt sich die Crashstruktur 84 auf der entsprechenden Längsaußenseite des Seitenaufpralls plastisch und baut dabei Aufprallenergie ab. Der übrige Teil wird über die Außenträger 80 und die Innenquerträger 82 in den Fahrzeugrahmen 68 geleitet. Das gesamte Energiebereitstellungsmodul 18 kann auch über den stufig ansteigenden Energieabbau unter den Fahrzeugrahmen 68 ausweichen. Eine mögliche geringfügige Deformation des Grundrahmens 76 bleibt ohne Auswirkungen auf die elektrischen Komponenten, da diese beweglich über die Trageinheiten 78 elastisch im Grundrahmen 76 gelagert sind und sich somit (begrenzt) innerhalb des Grundrahmens 76 verschieben können.

An einer Oberseite des Grundrahmens 76 sind mehrere Befestigungsvorrichtungen 86 angeordnet. Die Befestigungsvorrichtungen 86 sind dazu ausgebildet, den Grundrahmen 76 und damit das gesamte Energiebereitstellungsmodul 18 direkt und/oder indirekt an dem Fahrzeugrahmen 68 anzubringen, vorzugsweise lösbar, zum Beispiel mittels Schrauben. Beispielsweise können zwei Befestigungsvorrichtungen 86 an den freien Enden der Innenquerträger 82 zur direkten Befestigung an den Längsaußenseiten des Fahrzeugrahmens 68 angeordnet sein. Jeweils zwei weitere Befestigungsvorrichtungen 86 können an einer Vorderseite und an einer Rückseite des Grundrahmens 76 zur indirekten Befestigung beispielsweise über Zwischenbefestigungskonsolen an den Fahrzeugrahmen 68 angeordnet sein.

An einer Unterseite des Grundrahmens 76 kann an einer Vorderseite und einer Hinterseite des Grundrahmens 76 ein Unterfahrschutzelement 92 angeordnet sein. Das Unterfahrschutzelement 92 kann zu einer Horizontalachse und zu einer Vertikalachse geneigt sein und bspw. in Form eines Unterfahrschutzbleches ausgebildet sein. Die Unterfahrschutzelemente 92 sind an einer unteren Kante der Vorderseite und der Rückseite des Energiebereitstellungsmoduls 18 angeordnet. Die Unterfahrschutzelemente 92 erstrecken sich entlang einer gesamten Breite des Energiebereitstellungsmoduls 18.

Wie in Figur 8 dargestellt ist, weist das Energiebereitstellungsmodul 18 mehrere elektrische Komponenten auf. Insbesondere weist das Energiebereitstellungsmodul 18 mehrere Hochvolt-Energiespeicher 88 und ein Kühlsystem 90 auf. Das Energiebereitstellungsmodul 18 kann neben den Hochvolt-Energiespeichern 88 und dem Kühlsystem 90 weitere elektrische Komponenten aufweisen, um eine Funktionsintegration durch das Energiebereitstellungsmodul 18 zu erhöhen. Das Energiebereitstellungsmodul 18 kann bspw. ferner einen Hochvolt-Stromverteiler 94, einen Heizer 96, mindestens einen DC-DC-Wandler 98, mindestens einen Niedervolt-Energiespeicher 100, ein Bordladegerät 102, eine Lenkpumpe 104 und/oder eine Hochvolt-Schnittstelle 106 aufweisen, wie in Figur 8 dargestellt ist.

Die Hochvolt-Energiespeicher 88 sind bodenseitig in den Trageinheiten 78 angeordnet und somit elastisch gegenüber dem Grundrahmen 76 gelagert. Die Hochvolt-Energiespeicher 88 sind beispielsweise zum Speichern von elektrischer Hochvolt-Gleichstromenergie ausgebildet. Die Hochvolt-Energiespeicher 88 können, je nach Anforderung, zumindest teilweise parallel und/oder in Reihe geschaltet sein.

Die übrigen elektrischen Komponenten des Energiebereitstellungsmoduls 18, wie das Kühlsystem 90, der Hochvolt-Stromverteiler 94, der Heizer 96, der mindestens eine DC-DC-Wandler 98, der mindestens eine Niedervolt-Energiespeicher 100, das Bordladegerät 102, die Lenkpumpe 104 und/oder die Hochvolt-Schnittstelle 106, sind verteilt in den Trageinheiten 78 aufgenommen. Vorzugsweise sind diese elektrischen Komponenten zumindest teilweise über den Hochvolt-Energiespeichern 88 angeordnet, z. B. direkt oder indirekt auf diesen montiert.

Das Kühlsystem 90 ist zum aktiven Kühlen der Hochvolt-Energiespeicher 88 ausgebildet. Das Kühlsystem 90 kann einen Kältekreislauf mit Phasenwechsel des Kältemittels und einen dadurch gekühlten Flüssigkühlkreislauf aufweisen. Bspw. kann der Kältekreislauf einen Kompressor, einen Verflüssiger, ein Drosselorgan und einen Verdampfer aufweisen. Bspw. kann der Verdampfer zum Kühlen des Flüssigkühlkreislaufs verwendet werden, der mehrere Wärmetauscher für die mehreren Hochvolt-Energiespeicher 88 und ggf. weitere zu kühlende elektrische Komponenten des Energiebereitstellungsmoduls 18 aufweisen kann. Das Kühlsystem 90, insbesondere der Kompressor, Aktuatorik und Ventile davon, können elektrisch angetrieben sein, z. B. mit elektrischer Niedervolt-Energie von den Niedervolt-Energiespeichern 100. Der Kältekreislauf, insbesondere der Kompressor, der Verflüssiger, das Drosselorgan und/oder der Verdampfer, können in einer der äußeren Trageinheiten 78 angeordnet sein. Es ist möglich, dass das Kühlsystem 90 neben den mehreren Hochvolt-Energiespeichern 88 eine oder mehrere weitere elektrische Komponenten, vorzugsweise Hochvolt-Komponenten (z. B. DC-DC-Wandler 98 und/oder Hochvolt-Stromverteiler 94 usw.), des Energiebereitstellungsmoduls 18, die eine Temperaturregulierung benötigen, kühlt. Ferner kann das Kühlsystem 90 eine externe Kühlschnittstelle aufweisen, über die zu kühlenden Komponenten des Nutzfahrzeugs 10 außerhalb des Energiebereitstellungsmoduls 18 an das Kühlsystem 90 angebunden werden können. Es ist auch möglich, dass über eine externe Kühlschnittstelle ein Kühlmittel zu dem Energiebereitstellungsmodul 18 zugeführt werden kann, um elektrische Komponenten (z. B. DC-DC-Wandler 98 und/oder Bordladegerät 102) des Energiebereitstellungsmoduls 18 zu kühlen.

Der Hochvolt-Stromverteiler 94 stellt eine Vielzahl von Hochvolt-Anschlüssen für eine entsprechende Vielzahl von Hochvolt-Komponenten (z. B. Heizer 96, DC-DC-Wandler 98, Bordladegerät 102, Reichweitenverlängerer usw.) des Hochvolt-Bordnetzes bereit, um eine elektrisch leitende Verbindung mit den Hochvolt-Energiespeichern 88 zu ermöglichen.

Der Heizer 96 kann vorzugsweise als ein Hochvolt-Heizer ausgebildet sein. Der Heizer 96 kann bei niedrigen Außentemperaturen zum Erwärmen der Hochvolt-Energiespeicher 88 verwendet werden. Der Heizer 96 kann über den Hochvolt-Stromverteiler 94 mit elektrischer Energie von den Hochvolt-Energiespeichern 88 versorgt werden.

Der mindestens eine DC-DC-Wandler 98 ist zum Wandeln zwischen einer Hochvolt-Gleichspannung des Hochvolt-Bordnetzes zu einer Niedervolt-Gleichspannung eines Niedervolt-Bordnetzes ausgebildet. Bspw. können zwei DC-DC-Wandler 98 vorgesehen sein, um die Hochvolt-Gleichspannung jeweils zu einer 12 V Gleichspannung zu wandeln, um ein 24 V-Bordnetz des Nutzfahrzeugs 10 zu versorgen. Insbesondere können so die Niedervolt-Energiespeicher 100 geladen werden.

Die Niedervolt-Energiespeicher 100 sind zum Speichern von elektrischer Niedervolt-Energie zur Versorgung des Niedervolt-Bordnetzes ausgebildet. Bspw. können zwei 12 V-Energiespeicher 100 umfasst sein, um ein 24 V-Bordnetz zu versorgen.

Das Bordladegerät (OBC - engl. on-board charger) 102 dient zum externen Aufladen der mehreren Hochvolt-Energiespeicher 88. Das Bordladegerät 102 kann mit einer Gleichstrom-Ladedose zum Anschließen eines externen Ladekabels elektrisch verbunden sein. Das Bordladegerät 102 kann z. B. unterhalb eines der DC-DC-Wandler 98 angeordnet sein.

Die Lenkpumpe 104 kann einer Servolenkvorrichtung des Nutzfahrzeugs 10 zugeordnet sein. Die Lenkpumpe 104 kann vorzugsweise als eine Niedervolt-Lenkpumpe ausgebildet sein.

Über die elektrische Hochvolt-Schnittstelle 106 des Energiebereitstellungsmoduls 18 kann bspw. die elektrische Antriebseinheit 110 oder dessen Inverter 124 außerhalb des Energiebereitstellungsmoduls 18 mit elektrischer Energie versorgt werden. Das Energiebereitstellungsmodul 18 kann ferner eine oder mehrere Niedervolt-Schnittstellen zur Versorgung von elektrischen Niedervolt-Komponenten des Nutzfahrzeugs 10 außerhalb des Energiebereitstellungsmoduls 18 aufweisen. Z. B. können die Niedervolt-Schnittstellen an einen fahrzeugrahmenseitigen Hauptkabelstrang des Nutzfahrzeugs 10 angeschlossen werden.

Es ist auch möglich, dass das Energiebereitstellungsmodul 18 optional einen Reichweitenverlängerer (nicht dargestellt) aufweist. Der Reichweitenverlängerer ist ein zusätzliches Aggregat in einem Elektrofahrzeug, mit dem sich dessen Reichweite erhöhen lässt. Der Reichweitenverlängerer kann eine elektrische Energie zum Laden der Hochvolt-Energiespeicher 88 bereitstellen. Z. B. kann der Reichweitenverlängerer als Kombination von Verbrennungskraftmaschine und Generator oder als bspw. mit Wasserstoff oder Methanol betriebene Brennstoffzelle ausgebildet sein.

Sensible Hochvolt-Komponenten können besonders geschützt durch die beiden äußeren Trageinheiten 78 in der inneren Trageinheit 78 aufgenommen sein. Wie dargestellt ist, kann der Hochvolt-Stromverteiler 94, die DC-DC-Wandler 98, das Bordladegerät 102 und die Hochvolt-Schnittstelle 106 in der inneren Trageinheit 78 aufgenommen sein. Zusätzliche und/oder alternative elektrische Komponenten, insbesondere Hochvolt-Komponenten, können in der inneren Trageinheit 78 angeordnet sein. Das Kühlsystem 90, der Heizer 96, die Niedervolt-Energiespeicher 100 und/oder die Lenkpumpe 104 können bspw. in den äußeren Trageinheiten 78 angeordnet sein.

Die innere Trageinheit 78 ist nicht nur besonders geschützt zwischen den zwei äußeren Trageinheiten 78 angeordnet. Zusätzlich können sich die elektrischen Komponenten, die in der inneren Trageinheit 78 aufgenommen sind, in einer Vertikalrichtung nach oben zumindest teilweise überstehend über die innere Trageinheit 78 angeordnet sein, also aus der inneren Trageinheit 78 nach oben herausragen. Diese elektrischen Komponenten erstrecken sich somit in einen Raum hinein, der im am Fahrzeugrahmen 68 montierten Zustand des Energiebereitstellungsmoduls 18 besonders geschützt zwischen den Hauptlängsträgern 70 angeordnet ist (siehe Figur 7). Im Ausführungsbeispiel ist dies beispielsweise für den Hochvolt-Stromverteiler 94 und die DC-DC-Wandler 98 realisiert. Zusätzliche und/oder alternative elektrische Komponenten, insbesondere Hochvolt-Komponenten, können in der Vertikalrichtung nach oben überstehend in der inneren Trageinheit 78 angeordnet sein.

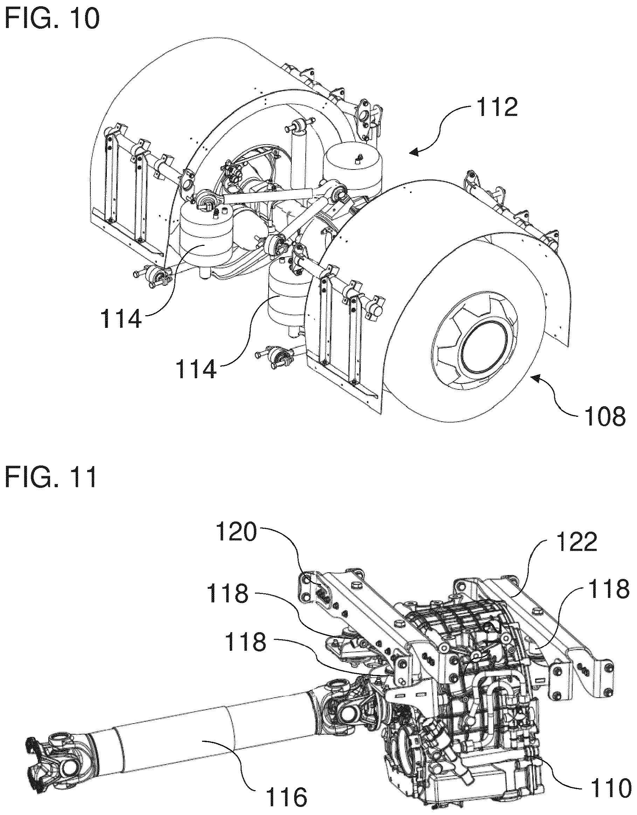

Die Figuren 10 und 11 zeigen Teile des Hinterachs-Antriebsmoduls 20. Die Teile können miteinander verbunden und gemeinsam als das Hinterachs-Antriebsmodul 20 an dem Fahrzeugrahmen 68 befestigt werden.

Das Hinterachs-Antriebsmodul 20 weist eine angetriebene Hinterachse 108 und eine elektrische Antriebseinheit 110 auf. Es ist möglich, dass das Hinterachs-Antriebsmodul 20 weitere Hinterachsen, z. B. auch eine Liftachse, aufweist.

Die Hinterachse 108 wird mittels einer Hinterachsaufhängung 112 an dem Fahrzeugrahmen 68 montiert. Die Hinterachsaufhängung 112 kann Luftfederbälge 114 zum Federn und Dämpfen aufweisen. An der Hinterachse 108 können weitere Komponenten angebracht sein, z. B: Antiblockiersystem-Regelventile usw.

Die elektrische Antriebseinheit 110 ist antreibend mit der Hinterachse 108 verbunden. Die elektrische Antriebseinheit 110 treibt eine Gelenkwelle 116 an, die wiederum antreibend mit der Hinterachse 108 verbunden ist. Die Gelenkwelle 116 ist gelenkig mit der elektrischen Antriebseinheit 110 verbunden. Die Gelenkwelle 116 ist gelenkig mit der Hinterachse 108 verbunden. Die elektrische Antriebseinheit 110 und die Gelenkwelle 116 sind entlang einer Längsachse des Nutzfahrzeugs 10 ausgerichtet.

Die elektrische Antriebseinheit 110 ist bezüglich einer Horizontalachse schräg gelagert, zum Beispiel in einem Winkel zwischen 0° und 10°, vorzugsweise rund 5° bis 6°. Ebenso verläuft die Gelenkwelle 116 schräg bezüglich der Horizontalachse, zum Beispiel in einem Winkelbereich zwischen 0° und 10°, vorzugsweise rund 5° bis 6°. Die Schrägstellung der Gelenkwelle 116 kann bei vertikalen Einfederbewegungen der Hinterachse 108 während der Fahrt des Nutzfahrzeugs 10 in Belastungshinsicht bezüglich der gelenkigen Verbindung zwischen der Gelenkwelle 116 und der Hinterachse 108 vorteilhaft sein. Die Schrägstellung der elektrischen Antriebseinheit 110 ermöglicht einen kleinen oder gar keinen Winkelversatz zwischen einer Ausgangswelle der elektrischen Antriebseinheit 110 und der schräg verlaufenden Gelenkwelle 116. Ein zu großer Winkelversatz würde zu hohen Belastungen an der gelenkigen Verbindung zwischen der elektrischen Antriebseinheit 110 und der Gelenkwelle 116 während des Betriebs der elektrischen Antriebseinheit 110 führen. Die hohen Belastungen könnten schließlich zu einem Bruch der gelenkigen Verbindung zwischen der elektrischen Antriebseinheit 110 und der Gelenkwelle 116 führen.

Zweckmäßig kann die elektrische Antriebseinheit 110 in einer 3-Punkt-Lagerung mittels dreier (Motor-) Lager 118 gelagert sein. Zwei der drei Lager 118 sind an einer der Hinterachse 108 zugewandten Seite der elektrischen Antriebseinheit 110 angeordnet. Ein drittes Lager 118 ist an einer Rückseite der elektrischen Antriebseinheit 110 abgewandt von der Hinterachse 108 angeordnet. Das dritte Lager 118 ist mittig bezüglich der Rückseite der elektrischen Antriebseinheit 110 angeordnet. An der Rückseite der elektrischen Antriebseinheit 110 können zudem außermittig Hochvolt-Anschlüsse zur elektrischen Energieversorgung der elektrischen Antriebseinheit 110 durch die Hochvolt-Energiespeicher 88 angeordnet sein. An die Hochvolt-Anschlüsse sind elektrische Leitungen anschließbar, um die elektrische Antriebseinheit 110 mit elektrischer Hochvolt-Energie zu versorgen. Durch die mittige Anordnung nur eines der drei Lager 118 an der Rückseite der elektrischen Antriebseinheit 110 wird ermöglicht, dass die Hochvolt-Anschlüsse nicht verdeckt und somit leicht zugänglich zum Anschließen der entsprechenden elektrischen Leitungen sind.

Die elektrische Antriebseinheit 110 ist über zwei Querträger 120, 122 an den Hauptlängsträgern 70 befestigbar. Die zwei Querträger 120, 122 sind parallel beabstandet. Die zwei Querträger 120, 122 erstrecken sich zwischen den zwei parallelen Hauptlängsträgern 70, wenn das Hinterachs-Antriebsmodul 20 an dem Fahrzeugrahmen 68 montiert ist. Die elektrische Antriebseinheit 110 ist von unten an den zwei Querträgern 120, 122 mittels der Lager 118 angebracht.

Der erste Querträger 120 ist bezüglich der Vorwärtsfahrtrichtung des Nutzfahrzeugs 10 vor der elektrischen Antriebseinheit 110 angeordnet. Der zweite Querträger 122 ist bezüglich der Vorwärtsfahrtrichtung des Nutzfahrzeugs 10 hinter der elektrischen Antriebseinheit 110 angeordnet. An dem ersten Querträger 120 sind zwei der drei Lager 118 von unten angebracht. An dem zweiten Querträger 122 ist eines der drei Lager 118 von unten angebracht. Die elektrische Antriebseinheit 110 wird so von den Querträgern 120, 122 getragen, dass sie geschützt zwischen den zwei Querträgern 120, 122 angeordnet ist.

Wie dargestellt ist, können die zwei Querträger 120, 122 ein umgedrehtes U-Profil aufweisen. Zwischen den Vertikalschenkeln des umgedrehten U-Profils ergibt sich ein Aufnahmeraum, in dem die Lager 118 teilweise aufgenommen werden können. Dadurch wird eine bündige oder annähernd bündige Positionierung der elektrischen Antriebseinheit 110 bezüglich der Oberseite der Hauptlängsträger 70 ermöglicht. Ferner sind die Lager 118 teilweise geschützt in den Querträgern 120, 122 angeordnet.

Die elektrische Antriebseinheit 110 ist nach der Montage des Hinterachs-Antriebsmoduls 20 am Fahrzeugrahmen 68 innen zwischen den Hauptlängsträgern 70 angeordnet. Dies wird dadurch ermöglicht, dass die elektrische Antriebseinheit 110 bspw. im Vergleich zu einer herkömmlichen Brennkraftmaschine kompaktere Abmessungen aufweist. Zusätzlich ist bei einem herkömmlichen Lastkraftwagen mit Leiterrahmen der heckseitige Bereich zwischen den Längsträgern des Leiterrahmens im Wesentlichen ungenutzt. Die Anordnung der elektrischen Antriebseinheit 110 auf Höhe der Hauptlängsträger 70, zwischen den Hauptlängsträgern 70 und hinter der Hinterachse 108 bietet somit eine bauraumgünstige und geschützte Anordnung für die elektrische Antriebseinheit 110. Die elektrische Antriebseinheit 110 ist somit fahrzeugheckseitig direkt unterhalb des Ladeaufbaumoduls 22 (siehe Figur 1) angeordnet.

Die Anordnung der elektrischen Antriebseinheit 110 ist so gewählt, dass die elektrische Antriebseinheit 110 bezüglich einer Vertikalrichtung nach unten über eine Unterseite der zwei Hauptlängsträger 70 übersteht. Beispielsweise steht die elektrische Antriebseinheit 110 um ungefähr eine Hälfte einer Höhe der elektrischen Antriebseinheit 110 in der Vertikalrichtung nach unten über die zwei Hauptlängsträger 70 über. Es ist auch möglich, dass die elektrische Antriebseinheit 110 mehr oder weniger in der Vertikalrichtung nach unten über die zwei Hauptlängsträger 70 übersteht.

Bezüglich einer Vertikalrichtung nach oben ist die elektrische Antriebseinheit 110 im Wesentlichen bündig mit einer Oberseite der zwei Hauptlängsträger 70 angeordnet. Ein Überstehen der elektrischen Antriebseinheit 110 ist hier nicht sinnvoll, da damit die Anordnung und Konfiguration des Ladeaufbaumoduls 22, das auf den Hauptlängsträgern 70 abgestützt ist (siehe Figur 1), beeinträchtigt würde. Es ist auch möglich, dass die elektrische Antriebseinheit 110 bezüglich einer Oberseite der zwei Hauptlängsträgern 70 ein wenig zurückversetzt ist, zum Beispiel um weniger als 100 mm.

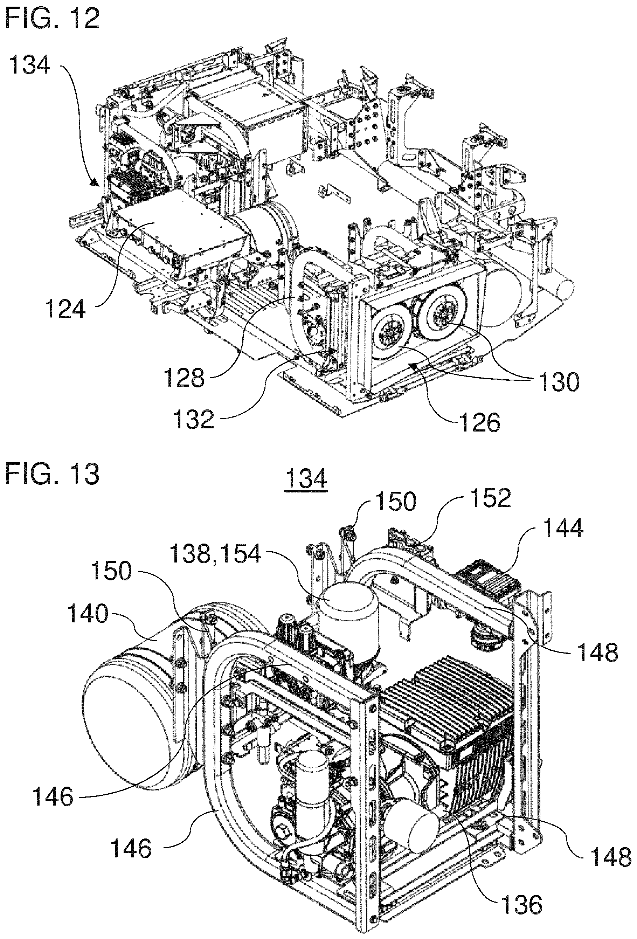

Figur 12 zeigt weitere Komponenten des Nutzfahrzeugs 10, die in einem Fahrzeugheckbereich des Nutzfahrzeugs 10 an den Fahrzeugrahmen 68 des Rahmenmoduls 16 montierbar sind.

Fahrzeugheckseitig kann bspw. ein Inverter (Wechselrichter) 124 angeordnet werden. Der Inverter 124 wandelt elektrische Hochvolt-Gleichstrom-Energie von den Hochvolt-Energiespeichern 88 in elektrische Hochvolt-Wechselstrom-Energie zum Antreiben der elektrischen Antriebsmaschine 110. Der Inverter 124 ist über elektrische Leitungen mit den Hochvolt-Anschlüssen der elektrischen Antriebseinheit 110 verbindbar. Im an den Fahrzeugrahmen 68 montierten Zustand ist der Inverter 124 geschützt zwischen den Hauptlängsträgern 70 auf Höhe der Hauptlängsträger 70 angeordnet. Der Inverter 124 kann an den Hauptlängsträgern 70 angebracht sein. Der Inverter 124 kann zweckmäßig hinter der Hinterachse 108 und vor der elektrischen Antriebsmaschine 110 angeordnet sein.

Das Nutzfahrzeug 10 kann ferner ein Kühlmodul 126 aufweisen. Das Kühlmodul 126 kann zweckmäßig im Heckbereich des Nutzfahrzeugs 10 angeordnet sein. Besonders vorteilhaft kann das Kühlmodul 126 an einer Längsaußenseite eines der beiden Hauptlängsträger 70 benachbart zu der elektrischen Antriebseinheit 110 angeordnet sein. Das Kühlmodul 126 kann eine Halterung 128, zum Beispiel ein offenes Gestell, aufweisen, die an der Längsaußenseite des entsprechenden Hauptlängsträgers 70 befestigt ist. Zweckmäßig ist das Kühlmodul 126 bezüglich einer Vertikalrichtung nach oben bündig oder zurückversetzt bezüglich einer Oberseite der Hauptlängsträger 70. Das Kühlmodul 126 kann bezüglich einer Vertikalrichtung nach unten über die Hauptlängsträger 70 überstehen.

Die Kühlmodul 126 kann einen oder mehrere Lüfter 130, zum Beispiel Radiallüfter, aufweisen, um Kühlluft zu einem oder mehreren Wärmetauschern oder Kühlern 132 des Kühlmoduls 126 zu fördern. Die Lüfter 130 können Kühlluft von einer Längsaußenseite des Nutzfahrzeugs 10 ansaugen. Die Kühler 132 können einen Kühler, zum Beispiel einen Ölkühler, für einen Kühlkreislauf zum Kühlen der elektrischen Antriebseinheit 110 aufweisen. Die Kühler 132 können einen Kühler, zum Beispiel einen Wasserkühler, für einen Kühlkreislauf zum Kühlen des Inverters 124, der DC-DC-Wandler 98 und/oder des Bordladegeräts 102 aufweisen.

Das Nutzfahrzeug 10 kann ferner ein Druckluftmodul 134 aufweisen. Das Druckluftmodul 134 kann an einer Längsaußenseite eines der Hauptlängsträger 70 montiert werden, vorzugweise entgegengesetzt zu dem Kühlmodul 126. Das Druckluftmodul 134 kann hinter der Hinterachse 108 angeordnet sein. Das Druckluftmodul 134 dient vorzugsweise zur mechanischen und funktionalen Zusammenfassung aller für eine Bremsfunktion des Nutzfahrzeugs 10 notwendigen Komponenten. Das Druckluftmodul 134 kann weitere Druckluftkomponenten aufweisen, zum Beispiel für die Luftfederbälge 64, 114 oder für ein Druckluft-Bremssystem eines Anhängers des Nutzfahrzeugs 10. Vorzugsweise sind die weiteren Druckluftkomponenten wahlweise modular in den Druckluftmodul 134 integrierbar, und zwar jeweils fahrzeugspezifisch bezüglich des jeweiligen Nutzfahrzeugs 10.

Eine Ausführungsvariante des Druckluftmoduls 134 ist im Detail in den Figuren 13 bis 15 dargestellt. Aus Übersichtsgründen sind in den Figuren 13 bis 15 eine elektrische Verkabelung und eine pneumatische Verrohrung innerhalb des Druckluftmoduls 134 nicht dargestellt.

Das Druckluftmodul 134 weist einen Luftkompressor 136, eine Druckluftaufbereitung 138, einen Druckluftspeicher 140, eine Druckluft-Betriebsbremsventileinheit 142, eine Druckluft-Feststellbremsventileinheit 144 und eine Haltevorrichtung 146 auf.

Der Luftkompressor (auch Luftpresser genannt) 136 ist zum Verdichten von Umgebungsluft zu Druckluft, zum Beispiel auf ein Druckniveau zwischen 8 bar und 12 bar, ausgebildet. Der Luftkompressor 136 ist vorzugsweise elektrisch angetrieben. Eine elektrische Energieversorgung des Luftkompressors 136 kann außerhalb des Druckluftmoduls 134 angeordnet sein, zum Beispiel im Energiebereitstellungsmodul 18.

Die Druckluftaufbereitung 138 ist zum Aufbereiten der Druckluft für die nachgeschalteten Druckluftsysteme ausgebildet. Vorzugsweise kann die Druckluftaufbereitung 138 einen Partikelfilter zum Entfernen von Schmutz aus der Druckluft, einen Luftkühler zum Kühlen der Druckluft und/oder einen Luftentfeuchter zum Entfeuchten der Druckluft aufweisen. Die Druckluftaufbereitung 138 ist stromabwärts des Luftkompressors 136 angeordnet. Es ist möglich, dass in Fluidverbindung zwischen dem Luftkompressor 136 und der Druckluftaufbereitung 138 bspw. eine Druckluft-Druckreglerventileinheit angeordnet und im Druckluftmodul 134 umfasst ist.

Im Druckluftspeicher 140 kann die von der Druckluftaufbereitung 138 aufbereitete Druckluft gespeichert werden. Der Druckluftspeicher 140 ist stromabwärts des Luftkompressors 136 und der Druckluftaufbereitung 138 angeordnet.

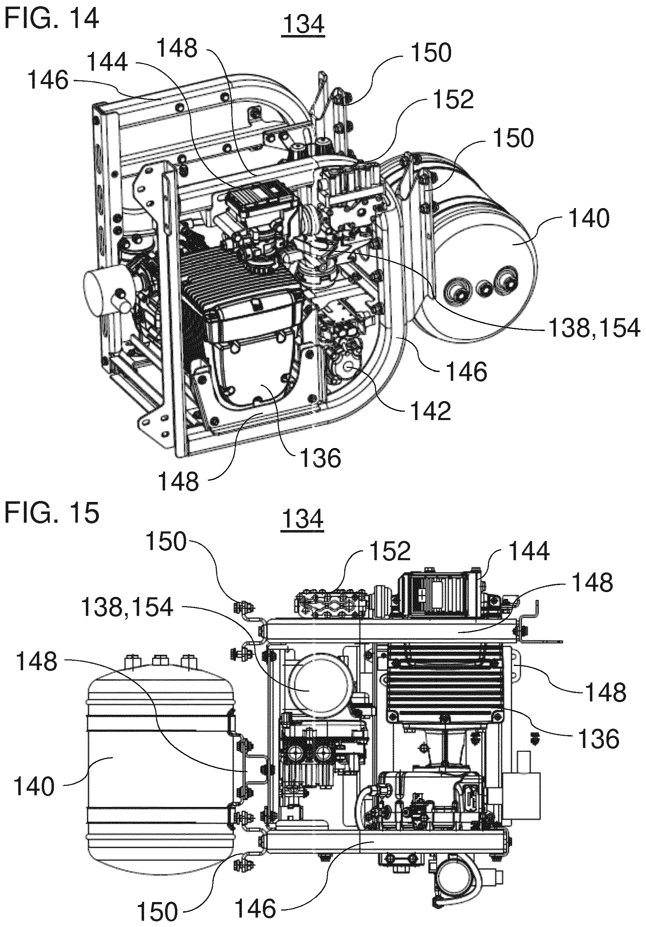

Die Druckluft-Betriebsbremsventileinheit 142 (siehe Figur 14) ist Teil eines Druckluft-Bremssystems des Nutzfahrzeugs 10. Die Druckluft-Betriebsbremsventileinheit 142 ist dazu ausgebildet, Bremsdrücke der Vorderachse 58 und der Hinterachse 108 zu steuern. Insbesondere kann die Druckluft-Betriebsbremsventileinheit 142 entsprechende pneumatische Bremszylinder an dem Vorderachsmodul 14 und dem Hinterachs-Antriebsmodul 20 mit Druckluft versorgen. Beispielsweise kann die Druckluft-Betriebsbremsventileinheit 142 ein Proportionalventil aufweisen, das in Fluidverbindung stromaufwärts des Bremszylinders an der Vorderachse 58 angeordnet ist. Beispielsweise kann die Druckluft-Betriebsbremsventileinheit 142 einen Hinterachsmodulator aufweisen, der in Fluidverbindung stromaufwärts des Bremszylinders an der Hinterachse 108 angeordnet ist. Die Druckluft-Betriebsbremsventileinheit 142 kann als eine elektrisch betätigte Magnetventileinheit mit einem oder mehreren Ventilen ausgebildet sein.

Die Druckluft-Feststellbremsventileinheit 144 ist Teil eines Druckluft-Bremssystems des Nutzfahrzeugs 10. Die Druckluft-Feststellbremsventileinheit 144 kann bspw. mit Bremszylindern einer Feststellbremse des Hinterachs-Antriebsmoduls 20 an der Hinterachse 108 in Fluidverbindung stehen.

Die Haltevorrichtung 146 trägt den Luftkompressor 136, die Druckluftaufbereitung 138, den Druckluftspeicher 140 und die Druckluft-Betriebsbremsventileinheit 142. Im Einzelnen sind der Luftkompressor 136, die Druckluftaufbereitung 138, der Druckluftspeicher 140 und die Druckluft-Betriebsbremsventileinheit 142 an speziell dafür vorgesehenen, vorbestimmten Anbringungsbereichen 148 der Haltevorrichtung 146 lösbar angebracht, zum Beispiel mittels Befestigungsschrauben.

Die Haltevorrichtung 146 ist als ein offenes Gestell ausgeführt. Das offene Gestell ist aus Querträgern, Längsträgern und Vertikalträgern aufgebaut, die eine Außenkontur des offenen Gestells bilden. Die Haltevorrichtung 146 ist über bspw. zwei beabstandete Halterungen 150 an dem Fahrzeugrahmen 68 des Nutzfahrzeugs 10 befestigbar, z. B. mittels lösbarer Schrauben.

Das Druckluftmodul 134 kann auch eine Druckluft-Luftfederungsventileinheit 152 aufweisen. Die Druckluft-Luftfederungsventileinheit 152 kann Teil eines Luftfederungssystems, das die Luftfederbälge 64 und 114 aufweist, sein. Die Druckluft-Luftfederungsventileinheit 152 ist ebenfalls an einem vorbestimmten Anbringungsbereich 148 an der Haltevorrichtung 146 getragen.

Die Druckluft-Luftfederungsventileinheit 152 ist dazu ausgebildet, einen Druck in dem Luftfederungssystem aufzubauen, zu halten und/oder zu senken. So kann ein Bodenabstand des Nutzfahrzeugs 10 an einer oder mehreren Achsen des Nutzfahrzeugs 10 vergrößert, gehalten oder verringert werden. Bspw. kann die Druckluft-Luftfederungsventileinheit 152 ein Vorderachsventil in Fluidverbindung mit den Luftfederbälgen 64 der luftgefederten Vorderachse 58, ein Hinterachsventil in Fluidverbindung mit Luftfederbälgen 114 der luftgefederte Hinterachse 108 und/oder ein Hinterachs-Liftachsventil in Fluidverbindung mit Luftfederbälgen einer luftgefederte Hinterachse und Hubzylindern einer Liftachse (nicht dargestellt) des Nutzfahrzeugs aufweisen.

Das Druckluftmodul 134 kann ferner eine Regenerationsvorrichtung 154 zum Regenerieren der Druckluftaufbereitung 138 aufweisen. Die Regenerationsvorrichtung 154 kann zumindest teilweise an der Haltevorrichtung 146 getragen sein. Es ist auch möglich, dass bspw. ein Druckluft-Regenerationsbehälter der Regenerationsvorrichtung 154 durch ein abgedichtetes Hohlprofil der Haltevorrichtung 146 gebildet ist.

Die Druckluft-Betriebsbremsventileinheit 142, die Druckluft-Feststellbremsventileinheit 144 und/oder die Druckluft-Luftfederungsventileinheit 152 kann als eine elektrisch betätigte Magnetventileinheit mit einem oder mehreren Ventilen ausgebildet sein.

Eine besonders bauraumgünstige Anordnung, die insbesondere hinsichtlich der notwendigen elektrischen Verkabelung und der pneumatischen Verrohrung des Druckluftmoduls 134 vorteilhaft sein kann, ergibt sich bei nachfolgender Komponentenanordnung. Der Druckluftspeicher 140 kann außen an der Haltevorrichtung 146 angebracht werden, vorzugsweisen an einer Seite der Haltevorrichtung 146, an der auch die Halterungen 150 angeordnet sind. Der Luftkompressor 136, die Druckluftaufbereitung 138 und/oder die Druckluft-Betriebsbremsventileinheit 142 können geschützt innerhalb der Außenkonturen der Haltevorrichtung 146 angebracht sein. Die Druckluft-Luftfederungsventileinheit 152 und/oder die Druckluft-Feststellbremsventileinheit 144 können außen an der Haltevorrichtung 146 und/oder oberhalb des Luftkompressors 136 angebracht sein. Andere Anordnungen der Komponenten sind ebenfalls möglich.

Das Druckluftmodul 134 kann, je nach Anforderung, fahrzeugspezifisch aufgebaut sein. D. h., das Druckluftmodul 134 kann selbst modular erweiterbar sein. Je nach Fahrzeugkonfiguration des Nutzfahrzeugs 10 besteht das Druckluftmodul 134 aus unterschiedlichen Komponenten (Bauteilvarianz und Komplexität). Das Druckluftmodul 134 kann zu einem frühen Montagestadium gebildet werden, ohne am Endmontageort die Teilevielfalt zu erhöhen. Um die Funktionen bei unterschiedlichen Fahrzeugtypen abzubilden, wird eine Basisausführung des Druckluftmoduls 134 jeweils modular mit einer oder mehreren Erweiterungen ergänzt, wenn gewünscht. Diese Erweiterungen bilden die Zusatzanforderungen für den entsprechenden Fahrzeugtyp ab.

Eine Basisausführung des Druckluftmoduls 134 kann z. B. den Luftkompressor 136, die Druckluftaufbereitung 138, den Druckluftspeicher 140, mindestens eine Druckluft-Bremsventilvorrichtung, z. B. 142 oder 144, und die Haltevorrichtung 146 aufweisen. Die Druckluftkomponenten 136-144 können an eigens dafür vorgesehenen, vorbestimmten Anbringungsbereichen 148 der Haltevorrichtung 146 angebracht sein. Die Basisausführung kann bspw. auch noch die Druckluft-Luftfederungsventileinheit 152 und/oder die Regenerationsvorrichtung 154 aufweisen.

Fahrzeugspezifische modulare Erweiterungen des Druckluftmoduls 134 können dann so vorgenommen werden, dass zusätzliche Druckluftkomponenten an weiteren, eigens dafür vorgesehenen, vorbestimmen Anbringungsbereichen angebracht werden können. Zusätzliche Druckluftkomponenten können bspw. eine funktionale Erweiterung zur Druckluftsteuerung eines Druckluft-Anhängerbremssystems und/oder ein funktionale Erweiterung zur Druckluftsteuerung einer Druckluft-Betriebs- und/oder -Feststellbremse oder eines Liftzylinders einer Vor- oder Nachlaufachse des Nutzfahrzeugs 10 sein. Eine Vorlaufachse ist in Vorwärtsfahrtrichtung vor der Hinterachse 108 angeordnet, eine Nachlaufachse dahinter.

In diesen erweiterten Ausführungen kann das Druckluftmodul 134 bspw. zusätzlich eine Druckluft-Anhängerbremssteuerventileinheit, die einem Druckluft-Anhängerbremssystem zugeordnet und an der Haltevorrichtung 146 getragen ist, und/oder einen oder mehrere weitere Druckluftspeicher, der oder die an der Haltevorrichtung 146 getragen ist oder sind, aufweisen.

Das Druckluftmodul 134 kann ferner eigenständig prüfbar sein, d. h. unabhängig von einer Montage an den Fahrzeugrahmen 68 und einer Anbindung an die Druckluftsysteme des Nutzfahrzeugs 10. Damit kann bereits vor Montage des Druckluftmoduls 134 eine Funktionsfähigkeit getestet werden. Dies gewährleistet den geforderten Qualitätsstandard in der Fahrzeugendmontage. Die Funktionsfähigkeit kann insbesondere hinsichtlich einer elektrischen Funktionsfähigkeit und einer pneumatischen Funktionsfähigkeit des Druckluftmoduls 134 erfolgen. Die Prüfung kann bspw. an Schnittstellen des Druckluftmoduls 134 erfolgen. Die Schnittstellen können somit als externe Prüfanschlüsse dienen. Es können auch zusätzliche oder alternative elektrische oder pneumatische externe Prüfanschlüsse am Druckluftmodul 134 umfasst sein.

Für die Funktionsprüfung können bspw. auch noch pneumatische Befüllanschlüsse am Druckluftmodul 134 umfasst sein.

Die Erfindung ist nicht auf die vorstehend beschriebenen bevorzugten Ausführungsbeispiele beschränkt. Vielmehr ist eine Vielzahl von Varianten und Abwandlungen im Rahmen des Schutzbereichs möglich. Der Schutzbereich der Erfindung ist nur vom Gegenstand der beigefügten Ansprüche definiert und beschränkt.

### Bezugszeichenliste

- 10: Nutzfahrzeug
- 12: Fahrerhausmodul
- 14: Vorderachsmodul
- 16: Rahmenmodul
- 18: Energiebereitstellungsmodul
- 20: Hinterachs-Antriebsmodul
- 22: Ladeaufbaumodul
- 24: Fahrerhaustragstruktur
- 26: Fahrerhausvorderwandstruktur
- 28: Fahrerhausbodenstruktur
- 30: Fahrerhausseitenwandstruktur
- 32: Fahrerhausrückwandstruktur
- 34: Fahrerhausdachstruktur
- 36: Unterfahrschutz
- 38: Abschleppvorrichtung
- 40: Seitencrashstruktur
- 42: Durchtritt
- 44: Unterkantenprofil
- 46: Aussparung
- 48: Oberkantenprofil
- 50: Verschraubungspunkte
- 52: Beplankung
- 54: Durchgangsöffnung
- 56: Luftführungskanal
- 58: Vorderachse
- 60: Vorderachsaufhängung
- 62: Befestigungskonsole
- 64: Luftfederbalg
- 66: Antiblocksystem-Regelventil
- 68: Fahrzeugrahmen
- 70: Hauptlängsträger
- 72: Querträger
- 74: Tragstruktur
- 76: Grundrahmen
- 78: Trageinheit
- 80: Außenträger
- 82: Innenquerträger
- 84: Crashstruktur
- 86: Befestigungsvorrichtung
- 88: Hochvolt-Energiespeicher
- 90: Kühlsystem
- 92: Unterfahrschutzelement
- 94: Hochvolt-Stromverteiler
- 96: Heizer
- 98: DC-DC-Wandler
- 100: Niedervolt-Energiespeicher
- 102: Bordladegerät
- 104: Lenkpumpe
- 106: Hochvolt-Schnittstelle
- 108: Hinterachse
- 110: Elektrische Antriebseinheit
- 112: Hinterachsaufhängung
- 114: Luftfederbalg
- 116: Gelenkwelle
- 118: Lager
- 120: Querträger
- 122: Querträger
- 124: Inverter
- 126: Kühlmodul
- 128: Halterung
- 130: Lüfter
- 132: Kühler
- 134: Druckluftmodul
- 136: Luftkompressor
- 138: Druckluftaufbereitung
- 140: Druckluftspeicher
- 142: Druckluft-Betriebsbremsventileinheit
- 144: Druckluft-Feststellbremsventileinheit
- 146: Haltevorrichtung
- 148: Anbringungsbereich
- 150: Halterung
- 152: Druckluft-Luftfederungsventileinheit
- 154: Regenerationsvorrichtung

## Patentansprüche

1. Nutzfahrzeug (10), vorzugsweise Lastkraftwagen, aufweisend:
ein Rahmenmodul (16), das einen Fahrzeugrahmen (68), vorzugsweise einen Leiterrahmen, aufweist;
ein Vorderachsmodul (14), das eine Vorderachse (58) und eine Vorderachsaufhängung (60) aufweist und an den Fahrzeugrahmen (68) montierbar ist;
ein Fahrerhausmodul (12), das an dem Fahrzeugrahmen (68) montierbar ist,
ein Hinterachs-Antriebsmodul (20), das eine Hinterachse (108) und eine elektrische Antriebseinheit (110), die trieblich mit der Hinterachse (108) verbunden ist, aufweist und an den Fahrzeugrahmen (68) montierbar ist; und
ein Energiebereitstellungsmodul (18), das zur Versorgung der elektrischen Antriebseinheit (110) mit elektrischer Energie ausgebildet und an den Fahrzeugrahmen (68) montierbar ist,
**dadurch gekennzeichnet,**
**dass** das Fahrerhausmodul (12) einen Durchtritt (42) zu einem Ladeaufbau des Nutzfahrzeugs (10) und/oder einen horizontal oder annähernd horizontal ausgerichteten Klimaanlagen-Wärmetauscher aufweist, und dass das Fahrerhausmodul (12) eine Fahrerhaustragstruktur (24) aufweist, die einen Fahrerhausrohbau bildet und als ein Gitterrahmen ausgebildet ist.

2. Nutzfahrzeug (10) nach Anspruch 1, wobei:
das Rahmenmodul (16), das Vorderachsmodul (14), das Fahrerhausmodul (12), das Hinterachs-Antriebsmodul (20) und das Energiebereitstellungsmodul (18) jeweils separat vorfertigbar und vormontierbar sind.

3. Nutzfahrzeug (10) nach Anspruch 1 oder Anspruch 2, wobei:
das Energiebereitstellungsmodul (18) zwischen dem Vorderachsmodul (14) und dem Hinterachs-Antriebsmodul (20) an den Fahrzeugrahmen (68) montierbar ist; und/oder
das Energiebereitstellungsmodul (18) von unten an den Fahrzeugrahmen (68) montierbar ist.

4. Nutzfahrzeug (10) nach einem der vorherigen Ansprüche, wobei:
das Energiebereitstellungsmodul (18) mehrere Hochvolt-Energiespeicher (88), ein Kühlsystem (90) für die Hochvolt-Energiespeicher (88), einen Heizer (96) für die Hochvolt-Energiespeicher (88), einen Hochvolt-Stromverteiler (94), ein Bordladegerät (102), einen DC-DC-Wandler (98), mehrere Niedervolt-Energiespeicher (100) und/oder eine Lenkpumpe (104) aufweist; und/oder
das Energiebereitstellungsmodul (18) eigenständig, vorzugsweise elektrisch, prüffähig ausgebildet ist.

5. Nutzfahrzeug (10) nach einem der vorherigen Ansprüche, wobei:
das Vorderachsmodul (14) mindestens eine Befestigungskonsole (62) zur Montage an den Fahrzeugrahmen (68) aufweist und die Vorderachsaufhängung (60) die Vorderachse (58) an der mindestens einen Befestigungskonsole (62) aufhängt; und/oder
das Vorderachsmodul (14) ein Antiblockiersystem-Regelventil (66) und/oder Luftfederbälge (64) aufweist; und/oder
die Vorderachsaufhängung (60) eine Einzelradaufhängung ist.

6. Nutzfahrzeug (10) nach einem der vorherigen Ansprüche, wobei:
das Fahrerhausmodul (12) rückseitig starr und/oder mittels mindestens einer Befestigungskonsole (62) des Vorderachsmoduls (14) an dem Fahrzeugrahmen (68) befestigt ist; und/oder
das Fahrerhausmodul (12) einen frontseitigen Unterfahrschutz (36) und/oder mindestens eine Abschleppvorrichtung (38) aufweist.

7. Nutzfahrzeug (10) nach einem der vorherigen Ansprüche, wobei:
die elektrische Antriebseinheit (110) bezüglich einer Vorwärtsfahrtrichtung des Nutzfahrzeugs (10) hinter der Hinterachse (108) angeordnet ist; und/oder
die elektrische Antriebseinheit (110) schräg an den Fahrzeugrahmen (68) montierbar ist; und/oder
die elektrische Antriebseinheit (110) in einer 3-Punkt-Lagerung an den Fahrzeugrahmen (68) montierbar ist.

8. Nutzfahrzeug (10) nach einem der vorherigen Ansprüche, wobei:
die elektrische Antriebseinheit (110) zwischen zwei parallelen Hauptlängsträgern (70) des Fahrzeugrahmens (68) montierbar ist; und/oder
die elektrische Antriebseinheit (110) in einer Vertikalrichtung nach oben bündig oder zurückversetzt bezüglich des Fahrzeugrahmens (68) ist; und/oder
die elektrische Antriebseinheit (110) in einer Vertikalrichtung nach unten über den Fahrzeugrahmen (68) übersteht.

9. Nutzfahrzeug (10) nach einem der vorherigen Ansprüche, ferner aufweisend:
ein Druckluftmodul (134), das zur Bereitstellung von Druckluft ausgebildet und an den Fahrzeugrahmen (68) montierbar ist.

10. Nutzfahrzeug (10) nach Anspruch 9, wobei:
das Druckluftmodul (134) an einer Längsaußenseite des Fahrzeugrahmens (68) montierbar ist; und/oder
das Druckluftmodul (134) bezüglich einer Vorwärtsfahrtrichtung des Nutzfahrzeugs (10) hinter der Hinterachse (108) angeordnet ist.

11. Nutzfahrzeug (10) nach Anspruch 9 oder Anspruch 10, wobei:
das Druckluftmodul (134) einen Luftkompressor (136), eine Druckluftaufbereitung (138) zum Kühlen, Filtern und/oder Trocknen von Druckluft, einen Druckluftspeicher (140), mindestens eine Bremsventileinheit (142, 144) für ein pneumatisches Bremssystem des Nutzfahrzeugs (10) und/oder eine Druckluft-Luftfederungsventileinheit (152) für ein pneumatisches Luftfederungssystem des Nutzfahrzeugs (10) aufweist; und/oder
das Druckluftmodul (134) eigenständig, vorzugsweise elektrisch und/oder pneumatisch, prüffähig ausgebildet ist; und/oder
das Druckluftmodul (134) separat vorfertigbar und vormontierbar ist.

12. Nutzfahrzeug (10) nach einem der vorherigen Ansprüche, ferner aufweisend:
ein Kühlmodul (126), das zum Kühlen der elektrischen Antriebseinheit (110) und/oder des Energiebereitstellungsmoduls (18) ausgebildet ist und an den Fahrzeugrahmen (68) montierbar ist.

13. Nutzfahrzeug (10) nach Anspruch 12, wobei:
das Kühlmodul (126) an einer Längsaußenseite des Fahrzeugrahmens (68) montierbar ist; und/oder
das Kühlmodul (126) bezüglich einer Vorwärtsfahrtrichtung des Nutzfahrzeugs (10) hinter der Hinterachse (108) angeordnet ist.

14. Nutzfahrzeug (10) nach Anspruch 12 oder Anspruch 13, wobei:
das Kühlmodul (126) einen Kühler (132), vorzugsweise einen Ölkühler, zum Kühlen der elektrischen Antriebseinheit (110) und einen Kühler (134), vorzugsweise einen Wasserkühler, zum Kühlen von Hochvolt-Komponenten, vorzugsweise des Energiebereitstellungsmoduls (18), aufweist; und/oder
das Kühlmodul (126) eigenständig, vorzugsweise elektrisch, prüffähig ausgebildet ist; und/oder
das Kühlmodul (126) separat vorfertigbar und vormontierbar ist.

15. Nutzfahrzeug (10) nach einem der vorherigen Ansprüche, ferner aufweisend:
ein Ladeaufbaumodul (22), das auf den Fahrzeugrahmen (68) oberhalb des Vorderachsmoduls (14), des Energiebereitstellungsmoduls (18) und des Hinterachs-Antriebsmoduls (20) montierbar ist und zum Aufnehmen von Ladegut ausgebildet ist.

## Claims

1. A utility vehicle (10), preferably a truck, comprising:
a frame module (16) which comprises a vehicle frame (68), preferably a ladder frame;
a front axle module (14) which comprises a front axle (58) and a front axle suspension (60) and is mountable on the vehicle frame (68);
a driver's cab module (12) which is mountable on the vehicle frame (68),
a rear-axle drive module (20) which comprises a rear axle (108) and an electric drive unit (110) which is drive-connected to the rear axle (108), and is mountable on the vehicle frame (68); and
an energy supply module (18) which is configured to supply the electric drive unit (110) with electrical energy and is mountable on the vehicle frame (68),
**characterized in that**
the driver's cab module (12) comprises a pass-through (42) to a load body of the utility vehicle (10) and/or a horizontally or approximately horizontally oriented air-conditioning heat exchanger, and **in that** the driver's cab module (12) comprises a cab support structure (24) which forms a cab shell and is configured as a lattice frame.

2. The utility vehicle (10) according to claim 1, wherein:
the frame module (16), the front axle module (14), the driver's cab module (12), the rear-axle drive module (20) and the energy supply module (18) can each be prefabricated and preassembled separately.

3. The utility vehicle (10) according to claim 1 or claim 2, wherein:
the energy supply module (18) is mountable on the vehicle frame (68) between the front axle module (14) and the rear-axle drive module (20); and/or
the energy supply module (18) is mountable on the vehicle frame (68) from below.

4. The utility vehicle (10) according to one of the preceding claims, wherein:
the energy supply module (18) comprises a plurality of high-voltage energy storages (88), a cooling system (90) for the high-voltage energy storages (88), a heater (96) for the high-voltage energy storages (88), a high-voltage power distributor (94), an on-board charger (102), a DC-DC converter (98), a plurality of low-voltage energy storages (100) and/or a steering pump (104); and/or
the energy supply module (18) is configured to be testable independently, preferably electrically.

5. The utility vehicle (10) according to one of the preceding claims, wherein:
the front axle module (14) comprises at least one mounting bracket (62) for mounting on the vehicle frame (68), and the front axle suspension (60) suspends the front axle (58) on the at least one mounting bracket (62); and/or
the front axle module (14) comprises an anti-lock braking system regulation valve (66) and/or air spring bellows (64); and/or
the front axle suspension (60) is an independent wheel suspension.

6. The utility vehicle (10) according to one of the preceding claims, wherein:
the driver's cab module (12) is fastened at a rear rigidly and/or by means of at least one mounting bracket (62) of the front axle module (14) to the vehicle frame (68); and/or
the driver's cab module (12) comprises a front underride guard (36) and/or at least one towing device (38).

7. The utility vehicle (10) according to one of the preceding claims, wherein:
the electric drive unit (110) is arranged behind the rear axle (108) with respect to a forward travel direction of the utility vehicle (10); and/or
the electric drive unit (110) is mountable obliquely on the vehicle frame (68); and/or
the electric drive unit (110) is mountable on the vehicle frame (68) in a 3-point mounting.

8. The utility vehicle (10) according to one of the preceding claims, wherein:
the electric drive unit (110) is mountable between two parallel main longitudinal beams (70) of the vehicle frame (68); and/or
the electric drive unit (110) is flush or set back in an upward vertical direction relative to the vehicle frame (68); and/or
the electric drive unit (110) projects beyond the vehicle frame (68) in a downward vertical direction.

9. The utility vehicle (10) according to one of the preceding claims, further comprising:
a compressed-air module (134) which is configured to provide compressed air and is mountable on the vehicle frame (68).

10. The utility vehicle (10) according to claim 9, wherein:
the compressed-air module (134) is mountable on a longitudinal outer side of the vehicle frame (68); and/or
the compressed-air module (134) is arranged behind the rear axle (108) with respect to a forward travel direction of the utility vehicle (10).

11. The utility vehicle (10) according to claim 9 or claim 10, wherein:
the compressed-air module (134) comprises an air compressor (136), a compressed-air preparation unit (138) for cooling, filtering and/or drying compressed air, a compressed-air reservoir (140), at least one brake valve unit (142, 144) for a pneumatic brake system of the utility vehicle (10) and/or a compressed-air air-suspension valve unit (152) for a pneumatic air-suspension system of the utility vehicle (10); and/or
the compressed-air module (134) is configured to be testable independently, preferably electrically and/or pneumatically; and/or
the compressed-air module (134) can be prefabricated and preassembled separately.

12. The utility vehicle (10) according to one of the preceding claims, further comprising:
a cooling module (126) which is configured to cool the electric drive unit (110) and/or the energy supply module (18) and is mountable on the vehicle frame (68).

13. The utility vehicle (10) according to claim 12, wherein:
the cooling module (126) is mountable on a longitudinal outer side of the vehicle frame (68); and/or
the cooling module (126) is arranged behind the rear axle (108) with respect to a forward travel direction of the utility vehicle (10).

14. The utility vehicle (10) according to claim 12 or claim 13, wherein:
the cooling module (126) comprises a radiator (132), preferably an oil cooler, for cooling the electric drive unit (110), and a cooler (134), preferably a water cooler, for cooling high-voltage components, preferably of the energy supply module (18); and/or
the cooling module (126) is configured to be testable independently, preferably electrically; and/or
the cooling module (126) can be prefabricated and preassembled separately.

15. The utility vehicle (10) according to one of the preceding claims, further comprising:
a load-body module (22) which is mountable on the vehicle frame (68) above the front axle module (14), the energy supply module (18) and the rear-axle drive module (20), and is configured to receive load goods.

## Revendications

1. Véhicule utilitaire (10), de préférence camion, comportant :
un module de châssis (16) qui comporte un châssis de véhicule (68), de préférence un châssis en échelle ;
un module d'essieu avant (14) qui comporte un essieu avant (58) et une suspension d'essieu avant (60) et qui peut être monté sur le châssis de véhicule (68) ;
un module de cabine de conducteur (12) qui peut être monté sur le châssis de véhicule (68),
un module d'entraînement d'essieu arrière (20), qui comporte un essieu arrière (108) et une unité d'entraînement électrique (110), laquelle est reliée en motricité à l'essieu arrière (108), et qui peut être monté sur le châssis de véhicule (68) ; et
un module de fourniture d'énergie (18), qui est configuré pour alimenter en énergie électrique l'unité d'entraînement électrique (110) et qui peut être monté sur le châssis de véhicule (68),
**caractérisé en ce**
**que** le module de cabine de conducteur (12) présente un passage (42) vers une structure de chargement du véhicule utilitaire (10) et/ou un échangeur de chaleur de système de climatisation orienté horizontalement ou approximativement horizontalement, et en ce que le module de cabine de conducteur (12) présente une structure porteuse de cabine de conducteur (24) qui forme une ossature de cabine de conducteur et est réalisée sous la forme d'un châssis en treillis.

2. Véhicule utilitaire (10) selon la revendication 1, le module de châssis (16), le module d'essieu avant (14), le module de cabine de conducteur (12), le module d'entraînement d'essieu arrière (20) et le module de fourniture d'énergie (18) pouvant chacun être préfabriqués et préassemblés séparément.

3. Véhicule utilitaire (10) selon la revendication 1 ou la revendication 2,
le module de fourniture d'énergie (18) pouvant être monté sur le châssis de véhicule (68) entre le module d'essieu avant (14) et le module d'entraînement d'essieu arrière (20) ; et/ou
le module de fourniture d'énergie (18) pouvant être monté sur le châssis de véhicule (68) par le dessous.

4. Véhicule utilitaire (10) selon l'une des revendications précédentes,
le module de fourniture d'énergie (18) comportant une pluralité d'accumulateurs d'énergie à haute tension (88), un système de refroidissement (90) pour les accumulateurs d'énergie à haute tension (88), un dispositif de chauffage (96) pour les accumulateurs d'énergie à haute tension (88), un distributeur de courant haute tension (94), un chargeur embarqué (102), un convertisseur CC-CC (98), une pluralité d'accumulateurs d'énergie à basse tension (100) et/ou une pompe de direction (104) ; et/ou le module de fourniture d'énergie (18) étant configuré de manière à pouvoir être testé de manière autonome, de préférence électriquement.

5. Véhicule utilitaire (10) selon l'une des revendications précédentes,
le module d'essieu avant (14) comportant au moins une console de fixation (62) destinée à être montée sur le châssis de véhicule (68) et la suspension d'essieu avant (60) accrochant l'essieu avant (58) à l'au moins une console de fixation (62) ; et/ou
le module d'essieu avant (14) comportant une vanne de régulation de système antiblocage (66) et/ou un soufflet d'amortisseur pneumatique (64) ; et/ou
la suspension d'essieu avant (60) étant une suspension de roue individuelle.

6. Véhicule utilitaire (10) selon l'une des revendications précédentes,
le module de cabine de conducteur (12) étant fixé au châssis de véhicule (68) du côté arrière de manière rigide et/ou au moyen d'au moins une console de fixation (62) du module d'essieu avant (14) ; et/ou
le module de cabine de conducteur (12) possédant une protection anti-encastrement (36) côté avant et/ou au moins un dispositif de remorquage (38).

7. Véhicule utilitaire (10) selon l'une des revendications précédentes,
l'unité d'entraînement électrique (110) étant disposée derrière l'essieu arrière (108) par rapport à un sens de marche avant du véhicule utilitaire (10) ; et/ou
l'unité d'entraînement électrique (110) pouvant être montée obliquement sur le châssis de véhicule (68) ; et/ou
l'unité d'entraînement électrique (110) pouvant être montée sur le châssis de véhicule (68) dans un palier à 3 points.

8. Véhicule utilitaire (10) selon l'une des revendications précédentes,
l'unité d'entraînement électrique (110) pouvant être montée entre deux longerons principaux parallèles (70) du châssis de véhicule (68) ; et/ou
l'unité d'entraînement électrique (110) étant alignée ou en retrait par rapport au châssis de véhicule (68) dans une direction verticale vers le haut ; et/ou
l'unité d'entraînement électrique (110) faisant saillie au-delà du châssis de véhicule (68) dans une direction verticale vers le bas.

9. Véhicule utilitaire (10) selon l'une des revendications précédentes, comportant en outre :
un module d'air comprimé (134) qui est configuré pour fournir de l'air comprimé et qui peut être monté sur le châssis de véhicule (68).

10. Véhicule utilitaire (10) selon la revendication 9, le module d'air comprimé (134) pouvant être monté sur un côté extérieur longitudinal du châssis de véhicule (68) ; et/ou
le module d'air comprimé (134) étant disposé derrière l'essieu arrière (108) par rapport à un sens de marche avant du véhicule utilitaire (10).

11. Véhicule utilitaire (10) selon la revendication 9 ou la revendication 10,
le module d'air comprimé (134) comportant un compresseur d'air (136), un conditionneur d'air comprimé (138) destiné à refroidir, filtrer et/ou sécher l'air comprimé, un accumulateur d'air comprimé (140), au moins une unité de vanne de frein (142, 144) pour un système de freinage pneumatique du véhicule utilitaire (10) et/ou une unité de vanne de suspension pneumatique à air comprimé (152) pour un système de suspension pneumatique du véhicule utilitaire (10) ; et/ou
le module d'air comprimé (134) étant configuré pour pouvoir être testé de manière autonome, de préférence électriquement et/ou pneumatiquement ; et/ou
le module d'air comprimé (134) pouvant être préfabriqué et préassemblé séparément.

12. Véhicule utilitaire (10) selon l'une des revendications précédentes, comportant en outre :
un module de refroidissement (126), qui est configuré pour refroidir l'unité d'entraînement électrique (110) et/ou le module de fourniture d'énergie (18) et qui peut être monté sur le châssis de véhicule (68).

13. Véhicule utilitaire (10) selon la revendication 12, le module de refroidissement (126) pouvant être monté sur un côté extérieur longitudinal du châssis de véhicule (68) ; et/ou
le module de refroidissement (126) étant disposé derrière l'essieu arrière (108) par rapport à un sens de marche avant du véhicule utilitaire (10).

14. Véhicule utilitaire (10) selon la revendication 12 ou la revendication 13,
le module de refroidissement (126) comportant un refroidisseur (132), de préférence un refroidisseur à huile, destiné à refroidir l'unité d'entraînement électrique (110) et un refroidisseur (134), de préférence un refroidisseur à eau, destiné à refroidir des composants haute tension, de préférence le module de fourniture d'énergie (18) ; et/ou
le module de refroidissement (126) étant configuré de manière à pouvoir être testé de manière autonome, de préférence électriquement ; et/ou
le module de refroidissement (126) pouvant être préfabriqué et préassemblé séparément.

15. Véhicule utilitaire (10) selon l'une des revendications précédentes, comportant en outre :
un module de structure de chargement (22) qui peut être monté sur le châssis de véhicule (68) au-dessus du module d'essieu avant (14), du module de fourniture d'énergie (18) et du module d'entraînement d'essieu arrière (20) et configuré pour recevoir une cargaison.
